Europäisches Patentamt

(18) European Patent Office

Office européen des brevets

(11) Publication number: **0 182 956**
**B1**

## (12) EUROPEAN PATENT SPECIFICATION

(45) Date of publication of patent specification: **12.12.90**

(51) Int. Cl.⁵: **G 01 V 1/36**, G 01 D 3/00

(21) Application number: **85102621.1**

(22) Date of filing: **07.03.85**

(54) Data processing.

(30) Priority: **14.03.84 US 589446**

(43) Date of publication of application:
**04.06.86 Bulletin 86/23**

(45) Publication of the grant of the patent:
**12.12.90 Bulletin 90/50**

(84) Designated Contracting States:
**BE DE FR GB IT NL**

(56) References cited:
**US-A-4 218 765**

**IEEE TRANSACTIONS ON ACOUSTICS,
SPEECH, AND SIGNAL PROCESSING, vol.
ASSP-26, no. 1, February 1978, pages 64-75,
IEEE, New York, US; K. KODERA et al.: "Analysis
of time-varying signals with small BT values"**

(73) Proprietor: **PHILLIPS PETROLEUM COMPANY
5th and Keeler
Bartlesville Oklahoma 74004 (US)**

(72) Inventor: **Neff, Dennis Byrd
22515 Wildwood Grove Dr.
Katy Texas 77450 (US)**

(74) Representative: **Altenburg, Udo, Dipl.-Phys.
et al
Patent- und Rechtsanwälte Bardehle-
Pagenberg-Dost-Altenburg & Partner Postfach
86 06 20
D-8000 München 86 (DE)**

# EP 0 182 956 B1

**Description**

This invention relates to a method for removing noise from geophysical data. In one aspect this invention relates to a method for removing noise from seismic data where sinusoid type traces are present.

In general, suitable data will be linear, logarithmic or sinusoidal in nature. Examples of such data are seismic data, sonic log data, density log data and other similar geophysical data. However, for the sake of illustration, the invention is described hereinafter in terms of seismic data.

The seismic method of mapping geological subsurfaces of the earth involves the use of a source of seismic energy and reception of the seismic energy by an array of seismic detectors, generally referred to as geophones. When used on land, the source of seismic energy generally is a high explosive charge electrically detonated in a borehole located at a selected grid point in a terrain or is an energy source capable of delivering a series of impacts to the earth's surface such as that used in Vibroseis systems. The acoustic waves generated in the earth by the explosion or impacts are reflected back from pronounced strata boundaries and reach the surface of the earth with varying amplitudes after varying intervals of time, depending on the distance and nature of the subsurface traversed. These returning acoustic waves in the form of sinusoidial type wave forms are detected by the geophones, which function to transduce such acoustic waves into representative electrical signals (generally referred to as "seismic wiggle traces"). The plurality of geophones are arrayed in a selected manner to detect most effectively the returning acoustic waves and generate electrical signals representative thereof. Information may be deduced concerning the geological subsurface of the earth from these electrical signals.

In addition to containing information of interest, seismic wiggle traces may also contain noise. Noise can be described as a high amplitude signal or a high amplitude, high frequency signal imposed on a wiggle trace. This noise may be caused by a plurality of phenomena such as powerline surges, environmental changes or general operation of the seismic exploration system. Also, high amplitude noise referred to as ground roll, tube waves or water bottom multiples may be present in the seismic data. The presence of the noise, especially the high amplitude noise, is a plague to interpreters since the noise may interfere with or mask the desired data which makes computer processing and interpretation of the seismic wiggle traces difficult.

Many attempts have been made in the past to develop methods of removing noise from seismic wiggle traces. The methods must be adaptable to computer processing since the shear volume of the data requires such processing. Also, the method should preferably be simplistic in operation. A brief discussion of some of the methods previously developed follows:

A process for filtering a two-dimensional array of data in the frequency domain is disclosed in US 4 218 765. The array of numbers is converted by Fourier transformation into the real and imaginary part of the frequency domain. Undesired waves present in the original array are removed by eliminating components of the Fourier-transformed array which fall within a convex polygon of arbitrary shape. The data is then transformed back to the time domain, where the undesired components have been filtered.

K. Kodera, et al., IEEE Trans. Acoust., Speech and Signal Process., Vol. ASSP—26, No. 1, 1978, pp. 64—76, compare methods for analyzing the frequency and energy content of time-varying signals, where both the amplitude and frequency vary. All of these methods are based upon the localization of some maximum in a predetermined filtering window, for example maximum amplitude in a time window, maximum amplitude in a frequency envelope, or a maximum in the energy distribution.

Another method is generally referred to as a median filter. The median filter will reorder anomalous amplitudes (noise) to the ends of each data sorted window and will not return a noise value when the median data point of each window is chosen. The disadvantage occurs when data windows do not contain noise which is most of the time. The median value of a noise free window is not necessarily the original data value.

Amplitude analysis schemes have also been developed. Such schemes vary but usually work on the principle of comparing the amplitude of each sample to that of a previous sample or to the average of adjacent samples. If the test sample amplitude differs more than a preset factor from the comparator sample, the test sample is revalued to equal the previous sample or the average of the adjacent window samples. This method works well for high amplitude noise but can fail if the noise has low to moderate amplitude.

Derivative schemes have also been developed. Typically, the slope or derivative of a sample is determined and tested against a preset maximum value. The results are good on single sample noise spikes but can fail if a noise burst is amplitude clipped and the slope becomes zero for extended samples.

It is thus an object of this invention to provide a method for removing noise, and especially high amplitude noise, from data such as seismic wiggle traces, which overcomes many of the problems encountered by the prior art. The invention is set out in Claim 1.

In accordance with the present invention, seismic wiggle traces are converted into an amplitude-derivative crossplot. It has been found that actual seismic data will cluster within a central area on such a plot but that noise, and especially noise spikes of high amplitude, will be outside of such a central area. Thus, a method is provided for identifying data points on a seismic wiggle trace which are affected by noise. Once identified, data processing can be used to remove the effect of the noise.

Other objects and advantages of the invention will be apparent from the foregoing brief description of

2

the invention and the claims as well as the detailed description of the drawings which are briefly described as follows:

FIGURE 1 is an illustration of seismic data which shows 1500 milliseconds of seismic data with a 500 millisecond normalizing window beginning at varied times;

FIGURE 2 illustrates a computer generated sinusoidal data trace;

FIGURE 3 illustrates the data trace of FIGURE 2 with random noise spikes added;

FIGURE 4 illustrates a normalized derivative versus normalized amplitude crossplot of the data trace illustrated in FIGURE 3;

FIGURE 5 illustrates the trace of FIGURE 3 reconstructed in accordance with the present invention;

FIGURE 6 shows a linearly damped 20 Hertz cosine wave;

FIGURE 7 illustrates the cosine wave of FIGURE 6 with noise added;

FIGURE 8 illustrates a crossplot of the absolute value of derivative versus amplitude for the wave form illustrated in FIGURE 7;

FIGURE 9 illustrates the affect of crossplotting data which is not normalized;

FIGURE 10 illustrates a crossplot for the data of FIGURE 9 where the data is normalized;

FIGURES 11 and 12 illustrate actual printouts of the computer programs described hereinafter;

FIGURES 13, 14 and 15 illustrate the affect of utilizing normalized average derivative to normalized average amplitude ratios other than 1.0; and

FIGURE 16 is an illustration of multiple passes on seismic data containing noise in accordance with the present invention.

The noise removal method of the present invention is described hereinafter as a set of sequential steps. The order of these steps may be varied if desired. However, the preferred sequence is as follows. The preferred sequence is utilized to generally describe the invention. The Examples are utilized for a more detailed description.

1. Select a Normalizing Window

In analysis of large quantities of data of varying values, it is highly desirable that the data be compared in reference to a standard or common value. This referencing to a standard is known as normalization. In the case of seismic data, a large amount of data is contained in a single trace. Therefore, the traces are divided into windows for two reasons: (1) it gives the computer a finite amount of data for the series of operations and (2) most important it tends to cluster data having similar amplitudes. Seismic data is very dynamic with clusters of high and low amplitude signals. If the normalizing as described is performed over the entire trace, the higher amplitudes tend to bias the normalizing factor. Thus, while normalizing is not required, it is preferred. In view of this preference, this invention is described in terms of using the normalizing step.

Any desired normalizing window can be selected. The normalizing window is generally set in the range of about 500 milliseconds to about 1000 milliseconds. It has been found that, for best results, at least 100 data points should be contained in a window. For a 4 millisecond sample rate, which is typical, a 500 millisecond window would encompass 125 data points. Shorter normalizing windows tend to reduce the amount of noise which can be identified since noise in the window will bias the normalizing multiplying factor.

Once the window is selected, the seismic wiggle traces are divided into the selected intervals beginning at zero time. Each window is processed separately but a number of traces, from different geophones, may be processed simultaneously.

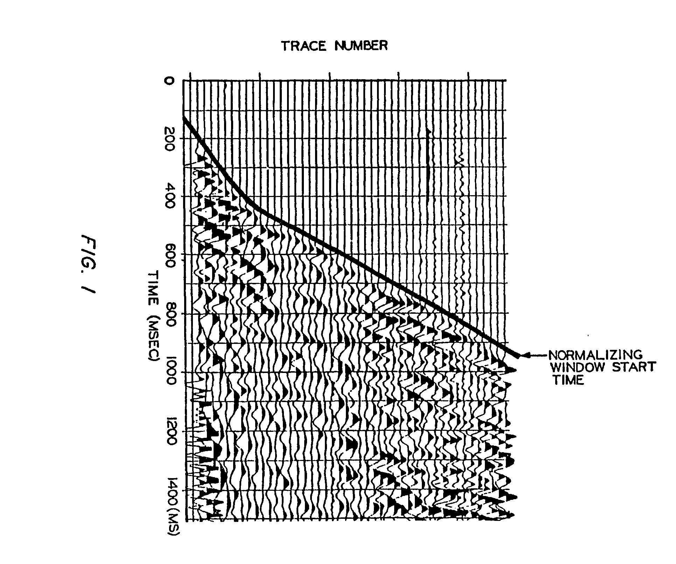

An example of seismic data which shows 1500 milliseconds (msec) of a 500 millisecond normalizing window beginning at zero time is illustrated in FIGURE 1. Referring to FIGURE 1, it is noted that data begins to be received by the various geophones (each wiggle trace is supplied from a different geophone set) at different times. If the first normalizing window is begun at a fixed time, such as zero time, then it can be seen that no valid information would be present (dominantly zeros) on the upper wiggle traces. This has an adverse affect on the normalizing procedure which will be described hereinafter and thus, the first window is given a length of zero to the first break time interval. The start for the first normalizing window is preferably set as illustrated in FIGURE 1. It should be remembered that the 500 ms window should be measured in reference now to the window start time and not the wiggle trace zero time. First break time is defined as that time data is first received at the geophone.

2. Determine Amplitude Average of Window

Seismic wiggle traces, such as those illustrated in FIGURE 1, are conventionally in digital format. In this step, the average amplitude of each digital format window is determined.

3. Normalize the Amplitude

In this step a normalizing value is selected by the interpreter (this value is referred to hereinafter as the "normalizing constant"). Any desired normalizing constant can be used based on the size of the resultant normalized data number desired. A typical normalizing constant is 10. The average determined in Step 2 is then divided into the normalizing constant determined by the interpreter in this Step 3 to determine a multiplier. All of the amplitudes for the seismic wiggle traces in the window are then multiplied by such

3

multiplier to normalize each amplitude. These are the data values used in the crossplot.

4. Determine Average Derivative

The derivative of the seismic wiggle trace for each data point is determined. An average derivative for the window is then determined. Typically, for a 4 millisecond sample rate, this average will be about one-half of the average determined in Step 2 above and, even at different sample rates, will always be less than the average determined in Step 2 above.

Any desired method may be utilized to determine the derivative. Methods such as backward difference, forward difference, central difference or the Hilbert transform are suitable. A 2 point forward difference or backward difference calculation is preferred because it has the advantage of allowing a noise spike to affect the slope (derivative) calculation at the spike value and at only one adjacent sample. Further, such calculation is relatively simple and is more rapidly computed than a central difference or other derivative methods. The resultant slope is the slope of a point between the two data points and not the data point.

Essentially the backward difference refers to the slope between the previous data point and the data point being analyzed. In contrast, the forward difference refers to the slope between the data point being analyzed and the next data point in time. A central difference refers to the average of the backward difference and forward difference and is the slope of the data point itself.

5. Normalized Derivative

The average determined in Step 4 above is divided into the normalizing constant selected in Step 3 to determine a second multiplier. All derivative values in the window are then multiplied by this second multiplier to normalize the derivative to the same reference values as the amplitude. These are the data used in the crossplot.

6. Crossplot Normalized Data

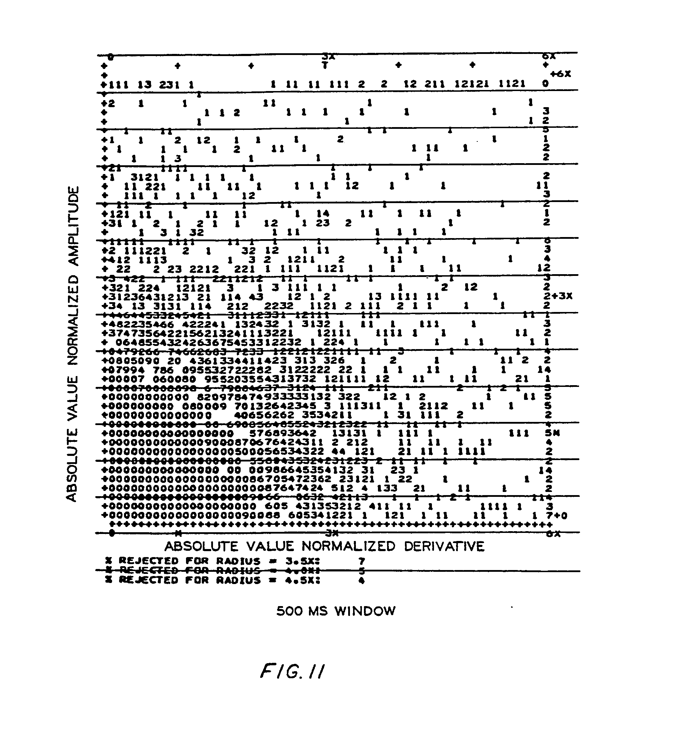

The normalized amplitude (ordinate) and normalized derivative (abscissa) are crossplotted. As has been previously stated, and as will be more fully illustrated in the examples, actual seismic data will tend to cluster at the center of the crossplot. If the absolute values of the normalized data are used all the plots will fall in the first quandrant of the crossplot. Under this condition actual seismic data will tend to cluster around the origin as illustrated in FIGURE 11.

7. Define Rejection Radius

Because of the normalizing procedure described above, a circle can be utilized for the rejection of noise. Any desired radius of the circle (referred to "rejection radius") can be utilized. The rejection radius will typically be in the range of about 3 times the normalizing constant to about 6 times the normalizing constant. A rejection radius in the range of about 4 times the normalizing constant to about 4.5 times the normalizing constant is generally an effective choice.

8. Remove Noise From Data

Each data point is examined in accordance with equation 1

(1) If $A^2 + D^2 > R^2$ then $A = A_{new}$

where $A$ = normalized amplitude value;
$\quad D$ = normalized derivative value;
$\quad R$ = rejection radius; and
$\quad A_{new}$ = new amplitude.

If $A^2 + D^2$ is greater than $R^2$, then it is necessary to assign a new amplitude to the data point since the old amplitude is a result of noise. Any desired method may be utilized to assign such a new value. Generally, such data points are either zeroed or reinterpolated. A preferred method of reassigning values to data points which are rejected under equation 1 is as follows:

(a) Check to see if the amplitude of the last good data point and the next data point which is good both have the same polarity (+ or −). If this is the case, then a straight line interpolaration is used between the last good and first good data point.

(b) If the number of consecutive bad data points exceeds an arbitrary number or if a polarity reversal occurs between the last good and first good data points, then the amplitude of the data points are set to zero.

Steps 1—8 or a desired portion of Steps 1—8 may be repeated several times for the same data if desired. Such multiple passes results in an improved removal of noise.

The following examples are presented in further illustration of the invention.

Example 1

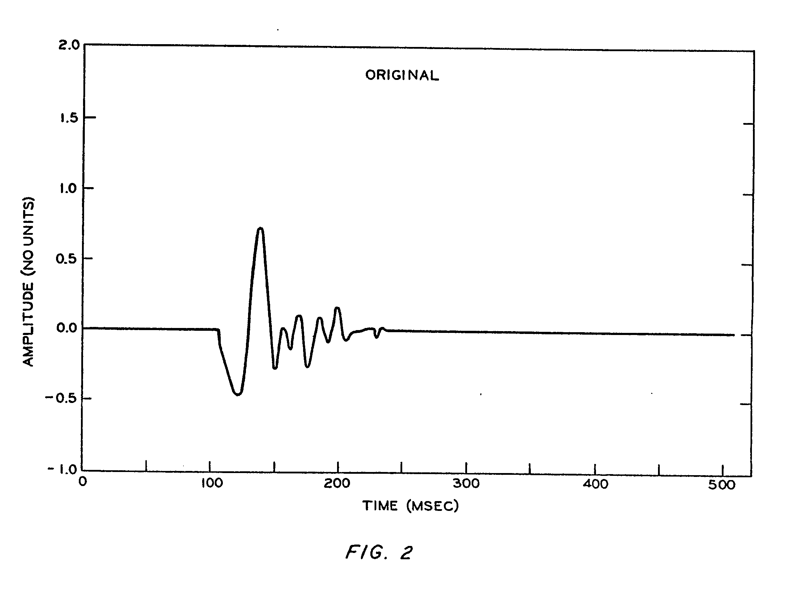

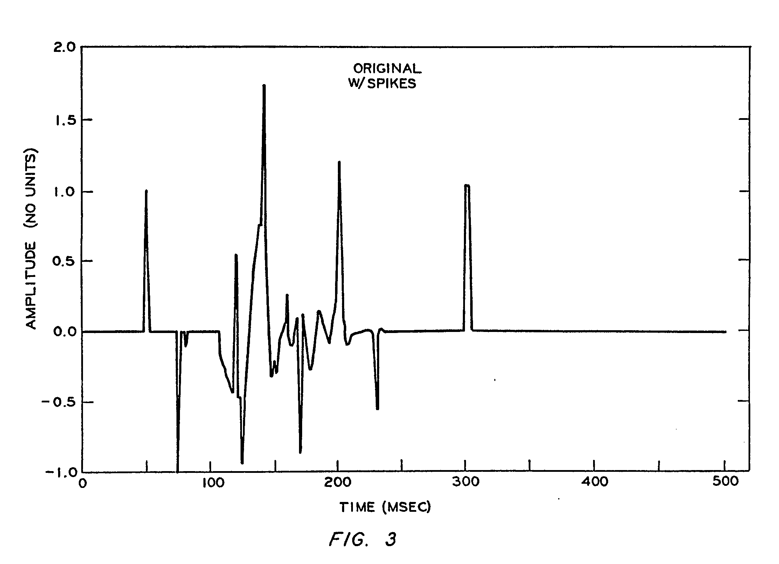

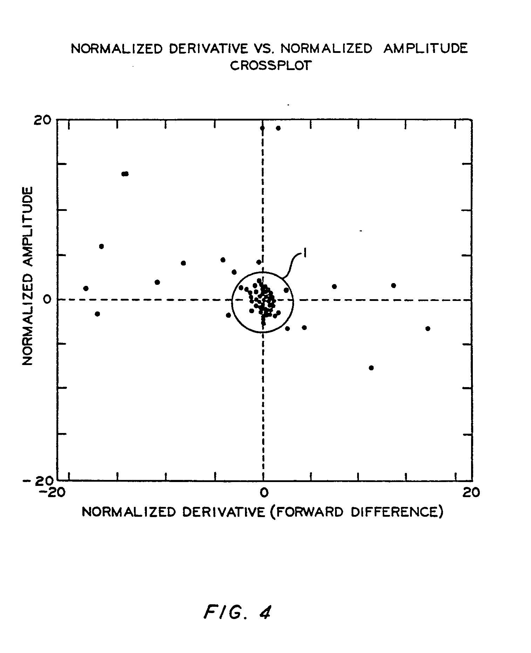

Figure 2 illustrates a computer generated sinusoidial data trace. In Figure 3, random noise spikes have been added to the trace illustrated in Figure 2. Figure 4 illustrates a normalized derivative versus normalized amplitude crossplot of the trace illustrated in Figure 3. The sample rate was 4 msec.

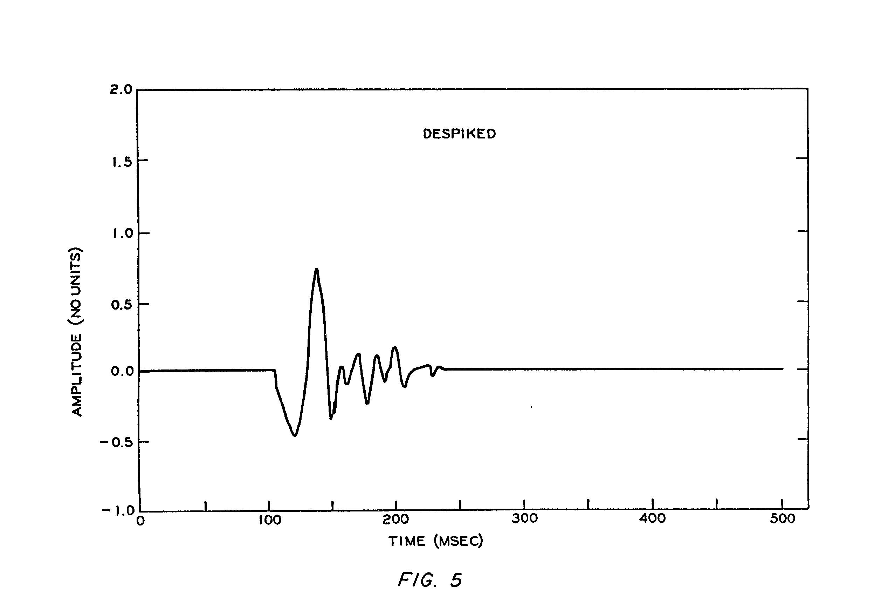

Data points outside the rejection circle 1 illustrated in Figure 4 represent noise. These data points were treated according to the procedure described in Step 8. After such treatment, the trace was regenerated and

4

is illustrated in Figure 5. It can be seen that the reconstruction data of Figure 5 compares very favorably with the original data of Figure 2.

## Example 2

In this example, the effectiveness of the present invention with respect to methods based on only amplitude or only derivative is illustrated.

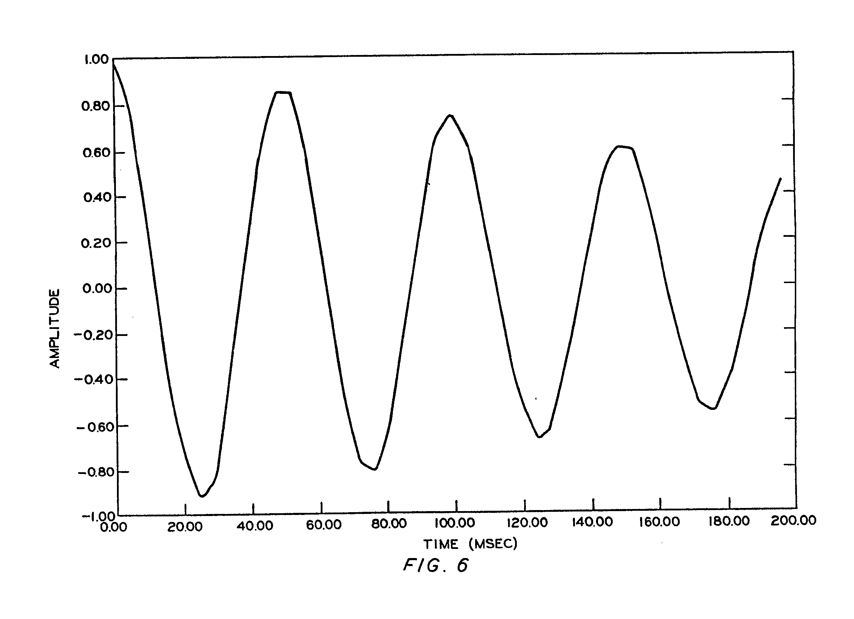

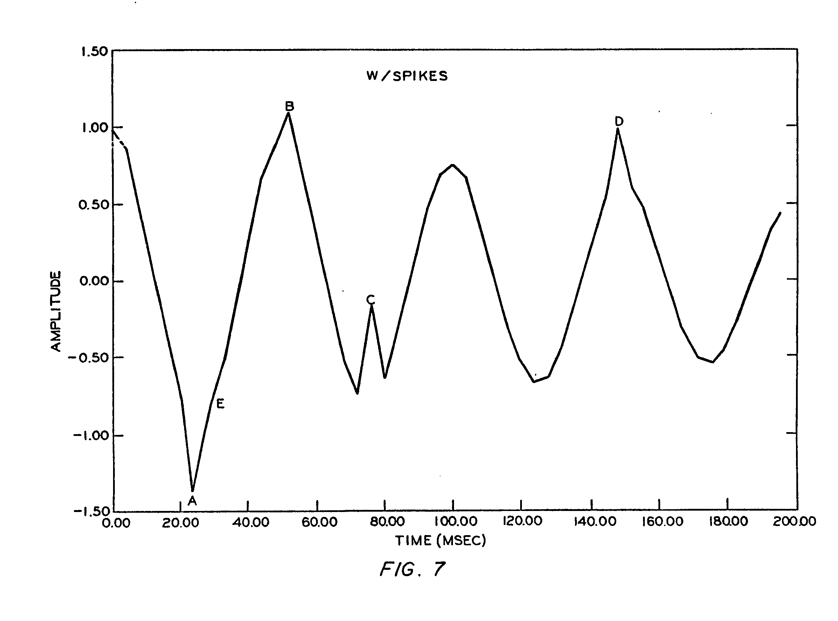

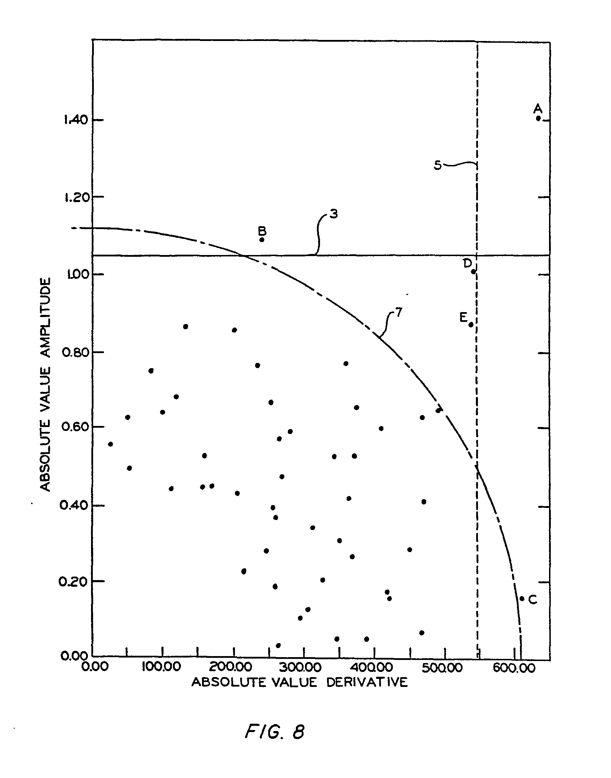

FIGURE 6 shows a linearly damp 20 Hertz cosine wave. In Figure 7, four anomalous, subtle spikes have been added at points A, B, C and D. A crossplot of the absolute value of derivative versus amplitude for the waveform illustrated in Figure 7 is illustrated in Figure 8. All data is in the first quadrant.

Referring now to Figure 8, the maximum amplitude of the trace will be 1 and, allowing for some variation, the acceptable maximum amplitude has been assumed to be 1.05. The maximum derivative of the trace will be .5 and, allowing for some variation, the acceptable maximum derivative has been assumed to be .55. These acceptable values are indicated by values below and/or to the left of the lines 3 and 5, respectively. Point A is rejected by either amplitude or derivative as it lies above the 1.05 horizontal line 3 and to the right of the .55 vertical line 5. Point B is rejected by amplitude criteria but not by derivative criteria. Conversely, Point C is rejected by derivative criteria only. Point D is marginal and is not rejected by either amplitude or slope criteria alone or in combination. By use of the invention method the rejection radius 7 in Figure 8 allows larger variation allowances for the acceptable values (1.1 for the amplitude and .6 for the derivative).

Even at these higher acceptance values, points A, B C and D are all eliminated by the rejection radius defined by an arc connecting the maximum acceptable derivative .6 and the maximum acceptable amplitude 1.1.

It is noted that the arc illustrated in Figure 8 resulted in the elimentation of Point E which is a good data point. If desired, such elimination can be overcome if the slope calculation at Point E is based upon a reasonable revalued amplitude, as defined in Step 8, at Point A (i.e., fix each spike as it is encountered). Thereafter point E should fall within the rejection radius area.

## Example 3

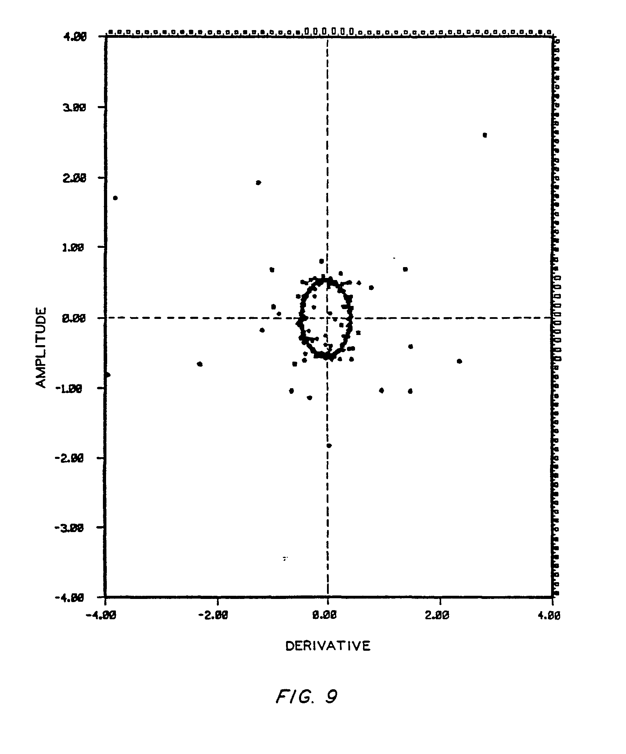

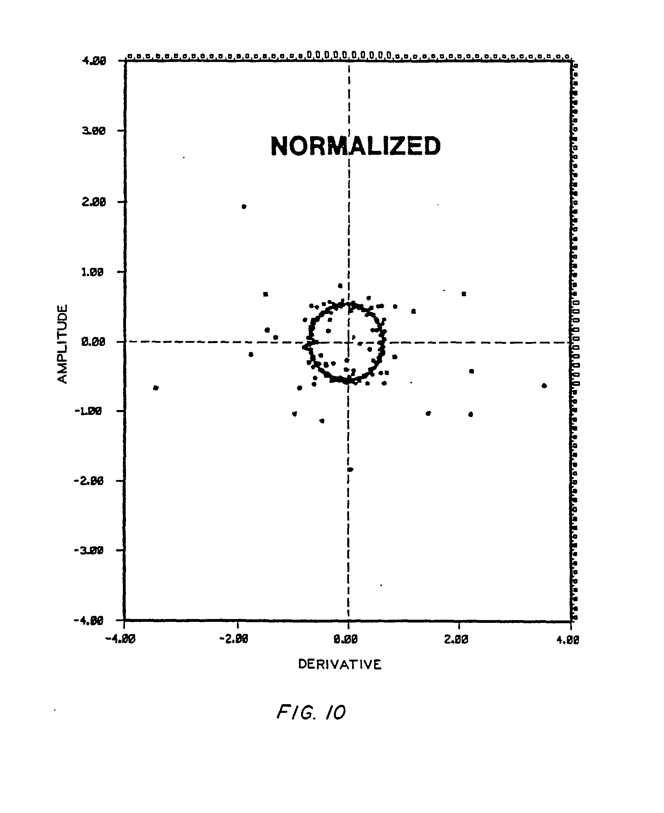

As was stated in the discussion of Step 1 above, normalizing is preferred but is not required. Figures 9 and 10 illustrate the effect of normalization. In Figure 9 the crossplotted data was not normalized. In Figure 10 the same data plotted in Figure 9 was normalized and then crossplotted. The ellipse formed by the data of FIGURE 9 has become nearly circular in FIGURE 10. The ellipse and circle in the figures are not actual rejection radii but only data point clusters.

There are two advantages to the normalization which are as follows:

(a) The rejection line can be circular in shape which is a simpler equation to deal with than a ellipse which would be required for the crossplot of Figure 9.

(b) Normalization can be performed over discreet windows such that valid high amplitudes in one part of a trace are proportionately compared to weak amplitudes in other parts of the trace.

It is noted that, in Figures 9 and 10, the data is shown as clustered along an ellipse or a circle. In real seismic data this would generally not be the case. The wide variation of amplitudes and frequencies cause the crossplotted points to cluster within a central area rather than plot along an ellipse or a circle. However, noise values still migrate outside the central area.

## Example 4

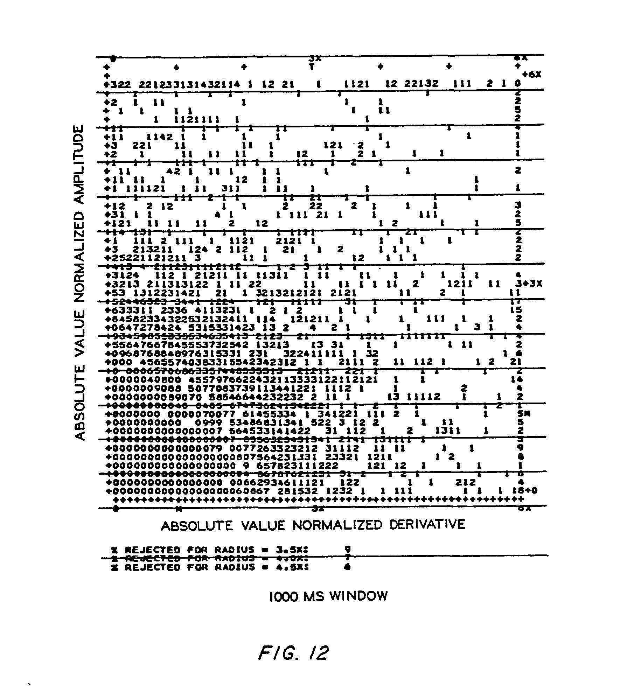

FIGURES 11 and 12 are actual printouts, representative of the absolute values of normalized amplitude and absolute values of normalized derivative of a trace, produced by the computer programs described hereinafter. These figures illustrate the effect of the normalizing window length. The data crossplotted in each case is identical with the numbers representing the number of data points at that matrix location. For example, 0 means 10 or more data points plot at that location. It can be seen that, at the greater window length, the percentage of the data rejected for any given rejection radius is greater.

In Figures 11 (500 ms window) and 12 (1000 ms window), M on each axis refers to the normalizing constant value described in Step 3 above. 3 X refers to 3 times M (the normalizing constant value selected in Step 3 above). The rejection radius then is selected between 3 and 6 times M.

Only the first quadrant contains data in Figures 11 and 12 since the absolute values are used.

## Example 5

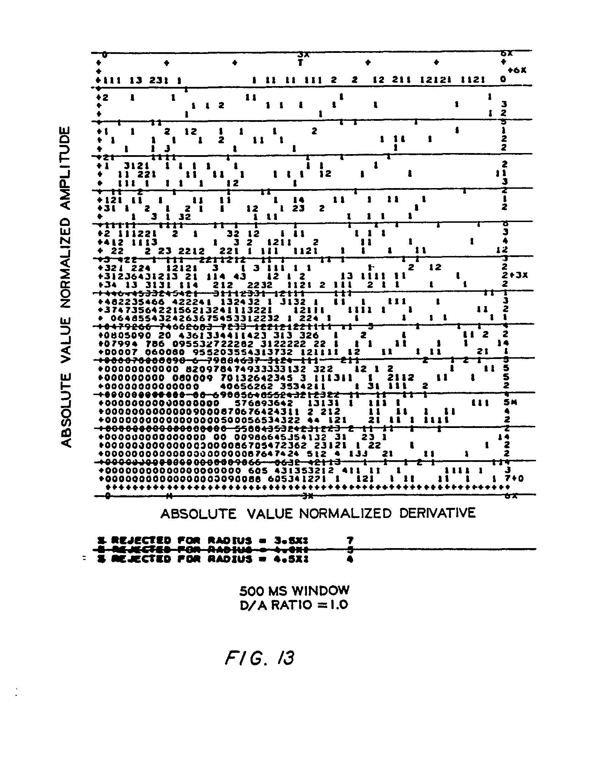

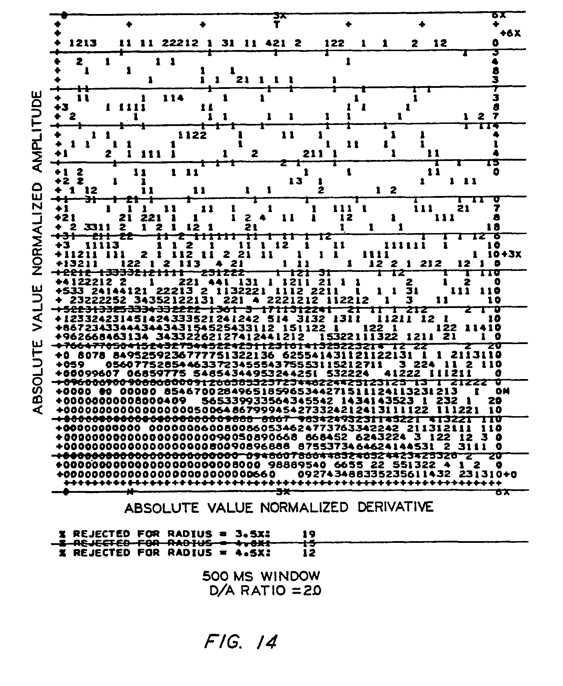

As was stated in Step 5 described above, the derivative and amplitude are preferably normalized to the same normalizing constant such that the normalized average derivative to normalized average amplitude ratio is equal to 1.0. The effect of using different ratios is illustrated in Figures 13, 14 and 15 which are similar to Figures 11 and 12. It can be seen that doubling the ratio, which is illustrated in Figure 14, results in a higher rejection of data. The data clusters move along the derivative axis thus causing more rejection due to the derivative criteria.

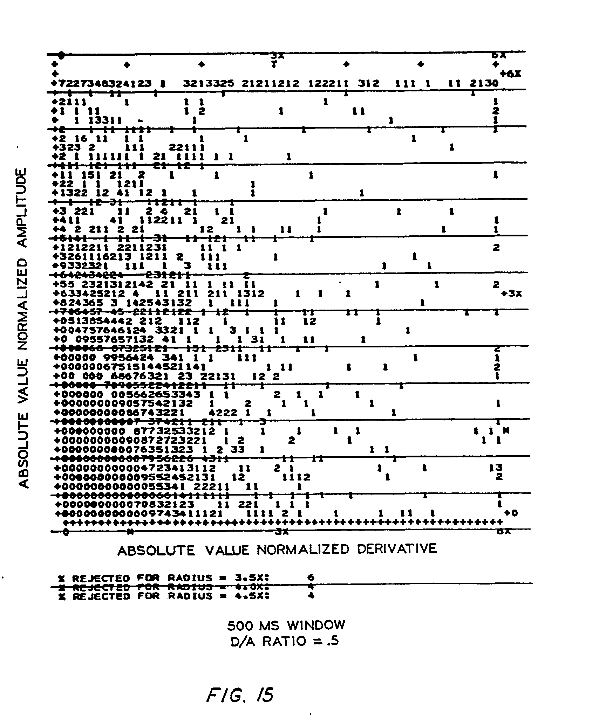

In Figure 15 halving of the ratio also results in a higher rejection of data due to the clustering of the data along the amplitude axis (amplitude criteria). The use of non-unity ratios will cause the rejection criteria to be more amplitude dependent for ratios less than 1.0 or more derivative dependent for ratios greater than 1.0.

5

Example 6

As has been previously stated, multiple passes may be desirable. If spikes are included in the normalization calculation, such spikes can cause the average to be excessive.

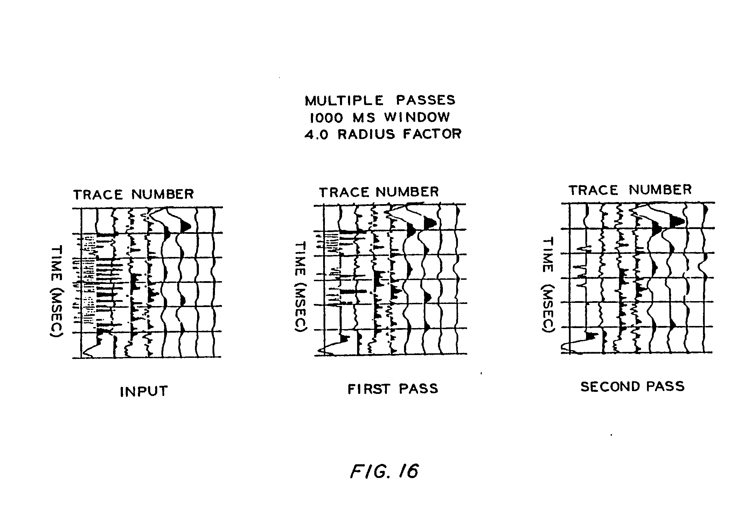

An example of a multiple pass is illustrated in Figure 16. The effect of the multiple pass is particularly pronounced for the seismic wiggle trace at the left.

Summary

In summary, it has been found that a crossplot of amplitude versus derivative can be utilized to locate data points which are affected by noise. Once located, the effect of noise on such data points can be removed. The advantages of the removal of noise from the seismic data prior to data processing are extremely significant as has been previously described.

The preferred computer program for accomplishing Steps 1—8 which crossplots the seismic data and then removes noise from the seismic data is set forth in Appendix 1. The computer program is written for an IBM 4341 computer manufactured by IBM and is self explanatory to one skilled in the use of the IBM 4341 computer. The input required into the computer program is the seismic data, in digital form, the window length, the window start time, the sample rate and the derivative/amplitude ratio.

The invention has been described in terms of a preferred embodiment. Reasonable variations are possible especially with respect to the exact steps utilized to perform the crossplot. Such variations are within the scope of the present invention as claimed.

Appendix I

```
**** TSO FOREGROUND HARDCOPY ****
DSNAME=A.GP1.UTIL.SOURCE                                    (DSPIKE2 )

//$NFBDSP  JOB  999,NFB,
//   MSGLEVEL=(1,1),
//   TIME=(5,0),
//   REGION=850K,
//  .MSGCLASS=Y,
//   NOTIFY=$NFB
//*MAIN FETCH=NONE
//STEP1 EXEC PLIXCL,
//  PARM.PLI='OPT(2),X,A,OF,MARGINS(2,72,1),LINECOUNT(56),MAP,NEST',
//  PARM.LKED='LIST,LET,MAP'
//PLI.SYSIN DD *
* PROCESS MAR(2,72,1);
 DSPIKE: PROC OPTIONS(MAIN);


     /* MAIN MODULE OF PROGRAM TO DESPIKE DATA AND GENERATE CROSSPLOT */
     /* OF DESPIKE INFORMATION                                        */


             /* INPUT VARIABLES */
             /* ID              - CARD TYPE IDENTIFIER WILL BE CP OR DP*/
             /* FIRST_DP_RECORD- FIRST RECORD FOR DESPIKING           */
             /* LAST_DP_RECORD - LAST RECORD FOR DESPIKING            */
             /* DP_NOR_WIND    - NORMILIZING WINDOW FOR DESPIKING     */
             /* REJECTION_FACTOR                                      */

             DCL ID               CHAR(2)          INIT('  ');
             DCL FIRST_DP_RECORD  FIXED BIN(31,0)  INIT(0);
             DCL LAST_DP_RECORD   FIXED BIN(31,0)  INIT(0);
             DCL DP_NOR_WIND      FIXED BIN(31,0)  INIT(0);
             DCL REJECTION_FACTOR FLOAT(6)         INIT(0);
             DCL DR               FLOAT(6)         INIT(1);
             DCL SAMPLE_RATE      FIXED BIN(31,0)  INIT(0);
             DCL NT               FIXED BIN(15,0)  INIT(0);
             DCL PRINT            FIXED BIN(15,0)  INIT(0);
             DCL FB(100)          FIXED BIN(31,0)  INIT((100)0);
             DCL TRACE#(100)      FIXED BIN(31,0)  INIT((100)0);

             /* INTERNAL VARIABLES */


             DCL REJECTION_RADIUS FIXED BIN(31,0)  INIT(0);
             DCL NFB              FIXED BIN(15,0)  INIT(0);
             DCL DP               CHAR(2)          INIT('DP');
             DCL DP_REQUESTED     FIXED BIN(15,0)  INIT(0);
             DCL ZT               FIXED BIN(31,0)  INIT(0);
             DCL PT               FIXED BIN(31,0)  INIT(0);
             DCL FIRST_FLAG       FIXED BIN(31,0)  INIT(0);
             DCL LENGTH           FIXED BIN(31,0)  INIT(0);
             DCL NC               FIXED BIN(15,0)  INIT(0);
             DCL NS               FIXED BIN(31,0)  INIT(0);
             DCL INDEX            FIXED BIN(31,0)  INIT(0);
             DCL I                FIXED BIN(15,0)  INIT(0);
             DCL J                FIXED BIN(15,0)  INIT(0);
             DCL L                FIXED BIN(15,0)  INIT(0);
             DCL M                FIXED BIN(15,0)  INIT(0);
             DCL N                FIXED BIN(15,0)  INIT(0);
             DCL TEMP             FIXED BIN(15,0)  INIT(0);
```

```
DCL LOOP                 FIXED BIN(15,0) INIT(0);
DCL FLAG                 FIXED BIN(15,0) INIT(0);
DCL EOF                  FIXED BIN(15,0) INIT(0);
DCL FN                   FIXED BIN(15,0) INIT(0);
DCL LN                   FIXED BIN(15,0) INIT(0);
DCL DUMMY                CHAR(70);

/*BRING IN TRACE STRUCTURE*/
DECLARE
 1 TRACE_ID_HEADER BASED(TRA_INP_PNTR),
   2 TRA_SEQ_NUM_LINE      FIXED BIN(31,0);
   2 TRA_SEQ_NUM_REEL      FIXED BIN(31,0);
   2 FILE_NUM              FIXED BIN(31,0);
   2 TRACE_NUM             FIXED BIN(31,0);
   2 ENERGY_SO_PT_NUM      FIXED BIN(31,0);
   2 SHOT_POINT            FIXED BIN(31,0);
   2 BLANK1                CHAR(4) INIT(' '),
   2 TRA_ID_CODE           FIXED BIN(15,0);
   2 BLANK2                CHAR(2) INIT(' ');
   2 BLANK3                CHAR(2) INIT(' ');
   2 DATA_USE              FIXED BIN(15,0),
   2 BLANK4                CHAR(12) INIT(' '),
   2 SOURCE_DEPTH          FIXED BIN(31,0);
   2 BLANK5                CHAR(54) INIT(' '),
   2 TIME_BRK_DIFF         FIXED BIN(15,0),
   2 BLANK6                CHAR(6) INIT(' '),
   2 NUM_SAMP              FIXED BIN(15,0);
   2 SAMP_INTERV           FIXED BIN(15,0);
   2 GAIN_TYPE             FIXED BIN(15,0);
   2 INSTR_GAIN            FIXED BIN(15,0);
   2 BLANK7                CHAR(18) INIT(' '),
   2 ALIAS_FILT_FREQ       FIXED BIN(15,0);
   2 ALIAS_FILT_SLOPE      FIXED BIN(15,0);
   2 NOTCH_FILT_FREQ       FIXED BIN(15,0);
   2 BLANK8                CHAR(10) INIT(' '),
   2 YEAR                  FIXED BIN(15,0);
   2 DAY                   FIXED BIN(15,0);
   2 HOUR                  FIXED BIN(15,0);
   2 MINUTE                FIXED BIN(15,0);
   2 SECOND                FIXED BIN(15,0);
   2 TIME_BASIS_CODE       FIXED BIN(15,0);
   2 BLANK9                CHAR(12) INIT(' '),
   2 REM_TELE_UNIT_NUM     FIXED BIN(15,0);
   2 REM_TELE_CHAN_NUM     FIXED BIN(15,0);
   2 BLANK10               CHAR(54) INIT(' '),
   2 TRACE_REFER1          FIXED BIN(15,0);

DECLARE
 1 TRACE_DATA             BASED(TRA_PNTR),
   2 NMB_SAMP             FIXED BIN (15,0),
   2 A(11 REFER(NMB_SAMP)) FLOAT DEC(6,0);

DCL TRACE(8000) FLOAT(6) BASED(TRA_INP_PNTR);
DCL TRACI(8000) FIXED BIN(15,0);

/* DECLARE POINTERS */
DCL (TRA_INP_PNTR,
     TRA_PNTR,
     FB_PNTR
     ) PTR;
```

8

```
      DCL  SUBSTR BUILTIN;
      DCL  ADDR BUILTIN;
      DCL  READTP EXTERNAL ENTRY ((*)FIXED BIN(15), FIXED BIN(31));
      DCL  TAPEOUT EXTERNAL ENTRY ((*)FIXED BIN(15),FIXED BIN(31,0));
      DCL  DESPIKE EXTERNAL ENTRY
                (PTR,PTR,FIXED BIN(31),FIXED BIN(31),
                 FIXED BIN(31),FIXED BIN(31),FIXED BIN(15),
                 PTR,FLOAT,FIXED BIN(15));
      TRA_INP_PNTR = ADDR(TRACI);
      FB_PNTR = ADDR(FB(1));

/* END OF FILE */
 ON ENDFILE(SYSIN) BEGIN;
      PUT SKIP EDIT('DATA ERROR  ABORT   DSPIKE') (A);
      STOP;
 END;


/* INPUT PARMS */

      GET FILE(SYSIN) EDIT(ID) (A(2));


      /* TEST FOR DESPIKING */


      IF ID = DP THEN DO;
         DP_REQUESTED = 1;
         GET FILE(SYSIN) EDIT(FIRST_DP_RECORD,
                             LAST_DP_RECORD,
                             DP_NOR_WIND,
                             REJECTION_FACTOR,
                             SAMPLE_RATE,
                             NT,
                             DR,
                             ZF,
                             PRINT)
                             (F(4),F(4),F(5),F(5,2),F(1),F(3),
                              F(3,1),F(2),F(1));
      PUT SKIP EDIT('DESPIKING REQUESTED') (A);
      PUT SKIP EDIT('FIRST RECORD FOR DESPIKE IS ',
                    FIRST_DP_RECORD) (A,F(4));
      PUT SKIP EDIT('STOP RECORD FOR DESPIKE IS   ',
                    LAST_DP_RECORD) (A,F(4));
      PUT SKIP EDIT('DESPIKE NORMALIZING WINDOW IS',
                    DP_NOR_WIND, ' MS')
                    (A,F(5),A);
      PUT SKIP EDIT('REJECTION FACTOR FOR DESPIKE IS',
                    REJECTION_FACTOR) (A,F(5,2));
      PUT SKIP EDIT('SAMPLE RATE IS ',SAMPLE_RATE,' MS')
                    (A,F(1),A);
      PUT SKIP EDIT('NUMBER OF TRACES IS',NT) (A,F(4));
      IF DR = 0 THEN DR = 1E-0;
      PUT SKIP EDIT('RATIO OF DERIVATIVE MEAN TO AMPLITUDE MEAN ',
                    DR) (A,F(3,1));
      IF ZF = 0 THEN ZF = 10;
      PUT SKIP EDIT('CONSECTIVE SPIKES ALLOWED BEFORE ZEROING',
                    ZF) (A,F(3));
      IF PRINT = 1 THEN DO;
```

9

```
            PUT SKIP EDIT('SPIKE LOCATION PRINT REQUESTED') (A);
        END;
        ELSE DO;
            PUT SKIP EDIT('NO SPIKE LOCATION PRINT REQUESTED') (A);
        END;
    END;
    ELSE DO;
        PUT SKIP EDIT('DESPIKE NOT REQUESTED -ABORT  DSPIKE') (A);
        STOP;
    END;


    /* INPUT FIRST BREAK TRACE NUMBERS AND TIME */

    M = 3;
    N = 4;
    DO J = 1 TO 10 WHILE (EOF=0);
    GET FILE (SYSIN) EDIT(DUMMY) (COL(1),A(70));
    L = 1;
    DO I = 1 TO 10 WHILE(FLAG=0);
        INDEX = SUBSTR(DUMMY,L,M);
        IF INDEX > NT THEN DO;
            PUT SKIP EDIT('TRACE NUMBER OUT OF RANGE ABORT DSPIKE')
                        (A);
            STOP;
        END;
        TRACE#(INDEX) = INDEX;
        L = L + 3;
        FB(INDEX) = SUBSTR(DUMMY,L,N);
        IF INDEX = 0 THEN NFB = NFB + 1;
        IF INDEX = NT THEN EOF = 1;
        L = L + 4;
        IF SUBSTR(DUMMY,L,M) = '    ' THEN FLAG = 1;
    END;
    END;
    LN = 1;
    DO I = 2 TO NT;
        IF FB(I) = 0 & LN = 1 THEN FN = I-1;
        IF FB(I) = 0 THEN LN = LN + 1;
        IF FB(I) = 0 THEN GO TO CONT1;
        IF LN > 1 THEN DO;
            LN = LN + FN;
            DO J = FN+1 TO LN -1;
                FB(J) = (((FB(LN)-FB(FN))/(LN-FN))*(J-FN)) + FB(FN);
            END;
            LN = 1;
    END;
CONT1:
    END;
    DO I = 1 TO NT;
        FB(I) = FB(I)/SAMPLE_RATE;
    END;
        PUT SKIP EDIT('FIRST BREAKS IN SAMPLES:') (A);
        PUT SKIP EDIT((FB(I) DO I=1 TO NT)) (F(5));

    /* CONVERT WINDOW TIME TO SAMPLES */
    DP_NOR_WIND = DP_NOR_WIND/SAMPLE_RATE;

    /* COMPUTE REJECTION RADIUS */
    REJECTION_RADIUS = REJECTION_FACTOR*1E1;
```

```
          /* INPUT TAPE RECORD */
CONT:     CALL READTP(TRACI,LENGTH);
          IF LENGTH = -1 THEN GO TO OUT;

      IF DP_REQUESTED = 1 THEN DO;
          /* IF 3200 OR 400 BYTE RECORD WRITE TO OUTPUT */
          IF LENGTH = 3200 | LENGTH = 400 THEN DO;
             CALL TAPEOUT(TRACI,LENGTH);
             GO TO CONT;
          END;
          TRACE_REFERI = NUM_SAMP + 1;
          TRA_PNTR = ADDR(TRACE_REFERI);
          A(NUM_SAMP+1) = A(NUM_SAMP);

          /* TEST FOR FIRST RECORD FOR DESPIKE REQUESTED */
          IF FIRST_DP_RECORD = FILE_NUM | FIRST_DP_RECORD = 0
                                      THEN FIRST_FLAG = 1;
          IF LAST_DP_RECORD = FILE_NUM THEN FIRST_FLAG=-1;
          NS = NUM_SAMP;
          IF FIRST_FLAG > 0 THEN DO;
             CALL DESPIKE(TRA_INP_PNTR,TRA_PNTR,NS,DP_NOR_WIND,
                          REJECTION_RADIUS,ZT,PRINT,FB_PNTR,DR,ZF);
             NC = NC + 1;
             GO TO CONT;
          END;
          IF FIRST_FLAG = 0 THEN GO TO CONT;
          IF FIRST_FLAG=-1 THEN DO;
             PT = ZT*100/(NC*NS);
             PUT SKIP EDIT('SPIKE PERCENTAGE OF TOTAL DATA SET',PT)
                          (A,F(6));
          END;
      END;
OUT:  END;
          IF LENGTH = -1 THEN
          PUT SKIP EDIT('END OF FILE ENCOUNTERED  DSPIKE') (A);
          IF FIRST_FLAG = 1 THEN DO;
             PT = ZT*100/(NC*NS);
             PUT SKIP EDIT('SPIKE PERCRNTAGE OF TOTAL DATA SETS',PT)
                          (A,F(6));
          PUT SKIP EDIT('END OF JOB') (A);
          END;
          END; /* DSPIKE */
  PROCESS MAR(2,72,1);
  DESPIKE: PROC(TRA_INP_PNTR,TRA_PNTR,NS,W,R,ZT,PRINT,FB_PNTR,DR,ZF);

          /* INPUT VARIABLES */
          /* TRACE_PNTR - LOCATION OF TRACE           */
          /* NS - NUMBER SAMPLES                      */
          /* LC - LAST RECORD TO DESPIKE              */
          /* W  - NUMBER SAMPLE/NORMALIZING WINDOW    */
          /* R  - REJECTION RADIUS                    */
          /* ZT                                       */
          /* PRINT - PRINT SPIKE LOCATIONS            */
          /* FB_PNTR - FIRST BREAK LOCATIONS          */
          /* DR - RATIO OF DERIVATIVE TO AMPLITUDE    */
          /* ZF - MAX NUMBER OF CONSECTIVE SPIKES     */

          DCL NS            FIXED BIN(31,0);
          DCL W             FIXED BIN(31,0);
```

```
DCL  R              FIXED BIN(31,0);
DCL  ZT             FIXED BIN(31,0);
DCL  RP             FIXED BIN(31,0);
DCL  NC             FIXED BIN(31,0);
DCL  NH             FIXED BIN(31,0);
DCL  LS             FIXED BIN(31,0);
DCL  FS             FIXED BIN(31,0);
DCL  WC             FIXED BIN(31,0);
DCL  ZF             FIXED BIN(31,0);
DCL  SX             FIXED BIN(31,0);
DCL  FB(100)        FIXED BIN(31,0) BASED(FB_PNTR);
DCL  NS2            FIXED BIN(31,0) INIT(0);
DCL  AN(8000)       FLOAT(6);
DCL  D(8000)        FLOAT(6);
DCL  H(8000)        FIXED BIN(31,0);
DCL  AF             FLOAT(6);
DCL  AT             FLOAT(6);
DCL  DF             FLOAT(6);
DCL  DT             FLOAT(6);
DCL  X              FLOAT(6);
DCL  Y              FLOAT(6);
DCL  DR             FLOAT(6);
DCL  FF             FIXED BIN(15,0);
DCL  SC             FIXED BIN(15,0);
DCL  Z              FIXED BIN(15,0);
DCL  G              FIXED BIN(15,0);
DCL  H              FIXED BIN(15,0);
DCL  K              FIXED BIN(15,0);
DCL  J              FIXED BIN(15,0);
DCL  L              FIXED BIN(15,0);
DCL  I              FIXED BIN(15,0);
DCL  PRINT          FIXED BIN(15,0);
DCL  NBYTE          FIXED BIN(31,0);

/*BRING IN TRACE STRUCTURE*/
DECLARE
  1 TRACE_ID_HEADER              BASED(TRA_INP_PNTR),
    2 TRA_SEQ_NUM_LINE           FIXED BIN(31,0),
    2 TRA_SEQ_NUM_REEL           FIXED BIN(31,0),
    2 FILE_NUM                   FIXED BIN(31,0),
    2 TRACE_NUM                  FIXED BIN(31,0),
    2 ENERGY_SO_PT_NUM           FIXED BIN(31,0),
    2 SHOT_POINT                 FIXED BIN(31,0),
    2 BLANK1                     CHAR(4) INIT(' '),
    2 TRA_ID_CODE                FIXED BIN(15,0),
    2 BLANK2                     CHAR(2) INIT(' '),
    2 BLANK3                     CHAR(2) INIT(' '),
    2 DATA_USE                   FIXED BIN(15,0),
    2 BLANK4                     CHAR(12) INIT(' '),
    2 SOURCE_DEPTH               FIXED BIN(31,0),
    2 BLANK5                     CHAR(54) INIT(' '),
    2 TIME_BRK_DIFF              FIXED BIN(15,0),
    2 BLANK6                     CHAR(6) INIT(' '),
    2 NUM_SAMP                   FIXED BIN(15,0),
    2 SAMP_INTERV                FIXED BIN(15,0),
    2 GAIN_TYPE                  FIXED BIN(15,0),
    2 INSTR_GAIN                 FIXED BIN(15,0),
    2 BLANK7                     CHAR(18) INIT(' '),
    2 ALIAS_FILT_FREQ            FIXED BIN(15,0),
    2 ALIAS_FILT_SLOPE           FIXED BIN(15,0),
    2 NOTCH_FILT_FREQ            FIXED BIN(15,0);
```

```
        2 BLANK8              CHAR(10) INIT(' '),
        2 YEAR               FIXED BIN(15,0),
        2 DAY                FIXED BIN(15,0),
        2 HOUR               FIXED BIN(15,0),
        2 MINUTE             FIXED BIN(15,0),
        2 SECOND             FIXED BIN(15,0),
        2 TIME_BASIS_CODE    FIXED BIN(15,0),
        2 BLANK9             CHAR(12) INIT(' '),
        2 REM_TELE_UNIT_NUM  FIXED BIN(15,0),
        2 REM_TELE_CHAN_NUM  FIXED BIN(15,0),
        2 BLANK10            CHAR(54) INIT(' '),
        2 TRACE_REFER1       FIXED BIN(15,0);

    DECLARE
      1 TRACE_DATA           BASED(TRA_PNTR),
        2 NMB_SAMP           FIXED BIN (15,0),
        2 A(II REFER(NMB_SAMP)) FLOAT DEC(6,0);

      DCL TR_OUT(6000) FIXED BIN(15,0) BASED(TRA_INP_PNTR);

/* DECLARE POINTERS  */
      DCL (TRA_INP_PNTR,
           TRA_PNTR,
           FB_PNTR
           ) PTR;
      DCL TAPEOUT EXTERNAL ENTRY((*)FIXED BIN(15), FIXED BIN(31));
      DCL ABS BUILTIN;
      DCL SIGN BUILTIN;
      DCL TRACE_PNTR PTR;
      DCL PLIDUMP BUILTIN;

      RR = R*R;
      NS2 = NS - FB(TRACE_NUM);
      NW =NS2/W;
      WC = NW*W;
      NW = NS2/W + 1;
      IF NS2 > WC THEN NW = NW + 1;
      WC = 0;
      /* CALCULATE DERIVATIVE MAGNITUDE BY FORWARD DIFFERENCE */

      DO J = 1 TO NS;
         K = J + 1;
         D(J) = ABS(A(K) - A(J));
      END;

      /* CALCULATE A WINDOW NORMALIZED AMPLITUDE AND DERIVATIVE */
      /* CALCULATE WINDOW MEAN AMPLITUDE AND MEAN DERIVATIVE    */
      /* CHECK FOR LAST WINDOW                                  */
    DO WHILE (WC < NW);
      WC = WC + 1;
      IF WC = NW THEN DO;
         LS = NS;
      END;
      ELSE DO;
         LS = (WC-1)*W + FB(TRACE_NUM);
      END;

      FS = (WC-2)*W+1 +FB(TRACE_NUM);
      IF WC = 1 THEN DO;
         FS = 1;
         LS = FB(TRACE_NUM);
```

```
END;
     /* CALCULATE MEAN AMPLITUDE */
     AT = 0;
     DO K = FS TO LS;
         AT = AT + ABS(A(K));
     END;

     IF AT <=0 THEN AT = 1;
     /* CALCULATE NORMALIZING FACTOR SO MEAN AMPLITUDE IS 10 */
     AF = 10*(LS-FS)/AT;
     /* NORMALIZE AMPLITUDES */
     DO K = FS TO LS;
         AN(K) = AF*ABS(A(K));
     END;

     /* CALCULATE MEAN DERIVATIVE */
     DT = 0;
     DO K = FS TO LS;
         DT = DT + D(K);
     END;
     IF DT <= 0 THEN DT = 1;

     /* CALCULATE NORMALIZING FACTOR SO MEAN DERIVATIVE IS 10 */
     DF = DR*10*(LS-FS)/DT;
     /* NORMALIZE DERIVATIVES */
     DO K = FS TO LS;
         D(K) = DF*D(K);
     END;

     IF FS>= LS THEN WC=NW;

END; /* DO WHILE (WC> NW) */

/* ZERO FILL IF SPIKE LOCATIONS */
DO J = 1 TO NS;
     M(J) = 0;
END;

/* CHECK FOR SPIKES AND FLAG M FILE IF FOUND */
DO K = 1 TO NS;
     IF AN(K)**2 + D(K)**2 > RR THEN M(K) = 1;
END;

/* INTERPOLATE BETWEEN SPIKE VALUES */
/* TEST FOR SPIKE AT FIRST SAMPLE AND SET AMPLITUDE TO 0 */

IF M(1) = 1 THEN A(1) = 0;
J = 2;
DO WHILE (J<NS);
SC = 0;
FF = 0;

DO I = 1 TO NS;
     IF M(I) -= 0 THEN SC = 1;
END;
IF SC = 0 THEN GO TO PRNT;
SC = 0;
     /* FIND LOCATION OF FIRST SPIKE */
     DO WHILE(M(J) = 0);
         J = J + 1;
     END;
```

```
        G = J-1;
        H = J;
        FF = FF + 1;/* COUNT SPIKES */

        /* FIND NUMBER OF CONSECTIVE SPIKES */
        DO WHILE(M(J) = 1);
            J = J + 1;
            FF = FF + 1;
        END;
        /* J - 1 = LOCATION OF LAST SPIKE IN SEQ */
        /* -G = LOCATION OF LAST VALUE BEFORE SPIKE*/
        /*  H = LOCATION OF FIRST SPIKE IN SEQ     */
        IF FF < 3 | FF >= ZF THEN DO;
            IF FF < 3 THEN DO;
                DO K = H TO J - 1;
                    A(K) = ((A(J) - A(G))*(K-G)/(J-G)) + A(G);
                END;
            FF = 0;
            END;
            ELSE DO;
                DO WHILE((SIGN(A(H)) = SIGN(A(G)))&(A(G) ¬= 0));
                    H = H - 1;
                    G = G - 1;
                END;

                DO WHILE((SIGN(A(J-1)) = SIGN(A(J)))&(A(J) ¬= 0));
                    J = J + 1;
                END;
                DO I = H TO J - 1;
                    A(I) = 0;
                END;

                FF = 0;
            END;
        END;
        ELSE DO;
            SX = 0;
            DO L = G TO J - 1;
                IF SIGN(A(L)) ¬= SIGN(A(L+1)) THEN SX = 1;
            END;
            IF SX = 1 THEN DO;
                DO WHILE((SIGN(A(H)) = SIGN(A(G)))&(A(G) = 0));
                    H = H - 1;
                    G = G - 1;
                END;

                DO WHILE((SIGN(A(J-1)) = SIGN(A(J)))&(A(J) ¬= 0));
                    J = J + 1;
                END;
                DO I = H TO J - 1;
                    A(I) = 0;
                END;

                FF = 0;
            END;
            ELSE DO;
                DO K = H TO J - 1;
                    A(K) = ((A(J) - A(G))*(K-G)/(J-G)) + A(G);
                END;
                FF = 0;
```

```
                    END;
              END;
          END;


          /* PRINT SPIKE LOCATIONS */
  PRNT:
          PUT SKIP EDIT('TRACE NUMBER',TRACE_NUM) (A,F(3));
          IF PRINT = 1 THEN
              PUT SKIP EDIT('SAMPLE NUMBERS OF SPIKES') (A);

          Z = 0;
          DO K = 1 TO NS;
              IF M(K) = 1 THEN DO;
                  IF PRINT = 1 THEN
                      PUT SKIP EDIT(K) (F(4));
                  Z = Z + 1;
                  ZT = ZT + 1;
              END;
          END;

          /* PRINT NUMBER OF SPIKES REJECTED */
          PUT SKIP EDIT('NUMBER OF SPIKES FOR THIS TRACE =',Z) (A,F(4));

          /* WRITE DESPIKED TRACE TO TAPE */
          NBYTE = NS*4 + 240;
          CALL TAPEOUT(TR_OUT,NBYTE);
      END;
  PROCESS;
  READIP: PROCEDURE(BUFFER,LENGTH);

  /* THE FUNCTION OF THIS ROUTINE IS TO READ A DATA RECORD FROM THE    */
  /* INPUT TAPE INTO 'BUFFER' AND TO PASS THE BUFFER AND LENGTH OF     */
  /* THE DATA RECORD IN BYTES 'LENGTH' BACK TO THE CALLING ROUTINE.    */

  /***********/
  /* INPUTS: */
  /***********/

      /* BUFFER - BUFFER TO PLACE DATA RECORD FROM TAPE.               */
      /* LENGTH - LENGTH OF DATA BUFFER IN BYTES.                      */

  /************/
  /* OUTPUTS: */
  /************/

      /* BUFFER - BUFFER CONTAING DATA FROM INPUT TAPE.                */
      /* LENGTH - LENGTH OF DATA RECORD IN BYTES. IF THERE            */
      /*          WAS AN ERROR TRYING TO READ THE RECORD             */
      /*          LENGTH WILL BE SET NEGATIVE. IF AND EOF            */
      /*          IS ENCOUNTERED LENGTH WILL BE SET TO -1.           */

  /***************************/
  /* INTERNAL VARIABLES: */
  /***************************/

      /*          DDNAME - DDNAME OF DDCARD FOR INPUT DEVICE.          */
```

```
/*              R      - CHAR TO SIGNAL I/O ROUTINE TO WRITE     */
/*                       DEVICE.                                 */


/**************/
/* EXTERNALS: */
/**************/

    /*  TAPEID - ASSEMBLER ROUTINE TO DO ACTUAL INPUT FROM      */
    /*           DEVICE.                                        */


/********************/
/* DECLARE INPUTS */
/********************/

    DCL BUFFER(*)   FIXED BIN(15,0);
    DCL LENGTH      FIXED BIN(31,0);


/*********************************/
/* DECLARE INTERNAL VARIABLES */
/*********************************/

    DCL DDNAME CHAR(8) INIT('DSPIKEIN');
    DCL R      CHAR(4) INIT('R   ');


/***********************/
/* DECLARE EXTERNALS */
/***********************/

    DCL TAPEID ENTRY OPTIONS(ASM,INTER);


/****************************/
/* INPUT FROM INPUT DEVICE */
/****************************/

    CALL TAPEID(DDNAME,BUFFER,LENGTH,R);


/**********/
/* EXIT */
/**********/

    RETURN;
    END; /* READTP */
PROCESS:
TAPEOUT: PROCEDURE(BUFFER,LENGTH);

/* THE FUNCTION OF THIS ROUTINE IS TO ACCEPT A DATA BUFFER 'BUFFER' */
/* OF LENGTH 'LENGTH' FROM A CALLING ROUTINE AND OUTPUT THE BUFFER  */
/* TO AN OUTPUT DEVICE NORMALLY A TAPE.                             */
```

```
/* INPUTS:                                                          */
/*      BUFFER - BUFFER OF DATA AND CONTROL INFORMATION TO BE SENT  */
/*               TO AN OUTPUT DEVICE.                               */
/*      LENGTH - LENGTH OF DATA BUFFER IN BYTES.                    */

/* OUTPUTS:                                                         */
/*      BUFFER OF LENGTH 'LENGTH'.                                  */

/* INTERNAL VARIABLES:                                              */
/*              DDNAME - DDNAME OF DDCARD FOR OUTPUT DEVICE.         */
/*              W      - CHAR TO SIGNAL I/O ROUTINE TO WRITE.       */
/*                       TO DEVICE.                                 */

/* EXTERNALS:                                                       */
/*      TAPEIO - ASSEMBLER ROUTINE TO DO ACTUAL OUTPUT TO DEVICE.   */


/*******************/
/* DECLARE INPUTS */
/*******************/

        DCL BUFFER(*)   FIXED BIN(15,0);
        DCL LENGTH      FIXED BIN(31,0);


/*********************************/
/* DECLARE INTERNAL VARIABLES */
/*********************************/

        DCL DDNAME CHAR(8) INIT('DSPIKOUT');
        DCL W      CHAR(1) INIT('W ');


/***********************/
/* DECLARE EXTERNALS */
/***********************/

        DCL TAPEIO ENTRY OPTIONS(ASM,INTER);

/***********************************/
/* OUTPUT TO OUTPUT DEVICE */
/***********************************/

        CALL TAPEIO(DDNAME,BUFFER,LENGTH,W);


/**********/
/* EXIT */
/**********/

        RETURN;
        END;    /*TAPEOUT*/
//LKED.SYSLMOD DD DSN=A.GP1.P7094.RDLIB,DISP=SHR
//LKED.GSLIB DD DSN=A.GP1.P7094.GSLIB,DISP=SHR
//LKED.RDLIB DD DSN=A.GP1.P7094.RDLIB,DISP=SHR
//LKED.SYSIN DD *
  ENTRY PLISTART
  INCLUDE GSLIB(CATLAB,DDCK,JGNYDNO)
  INCLUDE RDLIB(TAPEIO)
  NAME DESPIK2(R)
//*D.SYSPRINT DD SYSOUT=*
```

```
//*D.PLIDUMP DD SYSOUT=*
//*D.DSPIKEIN DD UNIT=TAPE,DISP=(OLD,KEEP),DSN=NFB.DESPIKE.TEST,
//*     LABEL=(,NL,EXPDT=98000),DCB=(RECFM=U,BLKSIZE=32000),
//*     VOL=SER=DESPIK
//*D.DSPIKEIN DD UNIT=SYSDA,DISP=(OLD,KEEP),DSN='$NFB.CD2TEST.DATA'
//*D.DSPIKOUT DD UNIT=TAPE,DISP=(NEW,PASS),
//*  DSN=NFB.TEST,LABEL=(,NL,EXPDT=98000),
//*  DCB=(RECFM=U,BLKSIZE=32000,DEN=4)
//*D.SYSIN DD *
//* 10   11   500   4. 4 971.0 8
//*1000 50 120 61 400 97 900
```

```
**** TSO FOREGROUND HARDCOPY ****
DSNAME=A.GP1.UTIL.SOURCE                                    (CROSPLT)        4

//$NFBDSP  JOB  999,NFB,
//   MSGLEVEL=(1,1),
//   TIME=(5,0),
//   REGION=1000K,
//   MSGCLASS=Z,
//   NOTIFY=$NFB
//*MAIN FETCH=NONE
//STEP1 EXEC PLIXCL,
//  PARM.PLI='OPT(2),X,A,OF,MARGINS(2,72,1),LINECOUNT(56),MAP,NEST',
//  PARM.LKED='LIST,LET,MAP'
//PLI.SYSIN DD *
* PROCESS MAR(2,72,1);
 CROSPLT: PROC OPTIONS(MAIN);


 /* MAIN MODULE OF PROGRAM TO GENERATE CROSSPLOT  */
 /* OF DESPIKE INFORMATION                        */


         /* INPUT VARIABLES */
         /*  ID               - CARD TYPE IDENTIFIER WILL BE CP OR DP*/
         /*  FIRST_CP_RECORD- FIRST RECORD FOR CROSSPLOT            */
         /*  LAST_CP_RECORD - LAST RECORD FOR CROSSPLOT             */
         /*  CP_INC         - RECORD INCREMENT FOR CROSSPLOT        */
         /*  CP_NOR_WIND    - NORMILIZING WINDOW FOR CROSSPLOT      */
         /*  TRACE#         - TRACES WITHIN RECORD FOR CROSSPLOT    */

         DCL ID               CHAR(2)          INIT('  ');
         DCL FIRST_CP_RECORD  FIXED BIN(31,0)  INIT(0);
         DCL LAST_CP_RECORD   FIXED BIN(31,0)  INIT(0);
         DCL CP_INC           FIXED BIN(15,0)  INIT(0);
         DCL CP_NOR_WIND      FIXED BIN(31,0)  INIT(0);
         DCL DR               FLOAT(6)         INIT(0);
         DCL TRACE#(24)       FIXED BIN(15,0)  INIT((24)0);


         /* INTERNAL VARIABLES */

         /* CP_REQUESTED    - SET TO ONE IF CP REQUESTED          */
         /* NUM_CP_TRACES   - NUMBER OF TRACES IN TRACE# VECTOR   */
         /* CP              - CHAR VARIABLE TO TEST FOR CP CARD    */

         DCL CP_REQUESTED     FIXED BIN(15,0)  INIT(0);
         DCL NUM_CP_TRACES    FIXED BIN(15,0)  INIT(0);
         DCL CP               CHAR(2)          INIT('CP');
         DCL ITN              FIXED BIN(15,0)  INIT(0);
         DCL ICNT             FIXED BIN(15,0)  INIT(0);
         DCL PLT_CNT          FIXED BIN(15,0)  INIT(0);
         DCL FIRST_FLAG       FIXED BIN(31,0)  INIT(0);
         DCL LENGTH           FIXED BIN(31,0)  INIT(0);
         DCL NC               FIXED BIN(15,0)  INIT(0);
         DCL NS               FIXED BIN(31,0)  INIT(0);
         DCL I                FIXED BIN(15,0)  INIT(0);
         DCL J                FIXED BIN(15,0)  INIT(0);
         DCL TRA_FLG          FIXED BIN(15,0)  INIT(0);
         DCL EOF              FIXED BIN(15,0)  INIT(0);
         DCL MEAN             FLOAT(6)  INIT(1E1);
         DCL D(4000,24)       FLOAT(6);
         DCL AN(4000,24)      FLOAT(6);
```

```
DCL SAV_FILE            FIXED BIN(31,0) INIT(99999);
DCL FB(24)              FIXED BIN(31,0) INIT((24)0);
DCL HDD                 FIXED BIN(31,0) INIT(0);

/*BRING IN TRACE STRUCTURE*/
DECLARE
    1 TRACE_ID_HEADER BASED(TRA_INP_PNTR),
      2 TRA_SEQ_NUM_LINE      FIXED BIN(31,0),
      2 TRA_SEQ_NUM_REEL      FIXED BIN(31,0),
      2 FILE_NUM              FIXED BIN(31,0),
      2 TRACE_NUM             FIXED BIN(31,0),
      2 ENERGY_SD_PT_NUM      FIXED BIN(31,0),
      2 SHOT_POINT            FIXED BIN(31,0),
      2 BLANK1                CHAR(4) INIT(' '),
      2 TRA_ID_CODE           FIXED BIN(15,0),
      2 BLANK2                CHAR(2) INIT(' '),
      2 BLANK3                CHAR(2) INIT(' '),
      2 DATA_USE              FIXED BIN(15,0),
      2 BLANK4                CHAR(12) INIT(' '),
      2 SOURCE_DEPTH          FIXED BIN(31,0),
      2 BLANK5                CHAR(54) INIT(' '),
      2 TIME_BRK_DIFF         FIXED BIN(15,0),
      2 BLANK6                CHAR(6) INIT(' '),
      2 NUM_SAMP              FIXED BIN(15,0),
      2 SAMP_INTERV           FIXED BIN(15,0),
      2 GAIN_TYPE             FIXED BIN(15,0),
      2 INSTR_GAIN            FIXED BIN(15,0),
      2 BLANK7                CHAR(18) INIT(' '),
      2 ALIAS_FILT_FREQ       FIXED BIN(15,0),
      2 ALIAS_FILT_SLOPE      FIXED BIN(15,0),
      2 NOTCH_FILT_FREQ       FIXED BIN(15,0),
      2 BLANK8                CHAR(10) INIT(' '),
      2 YEAR                  FIXED BIN(15,0),
      2 DAY                   FIXED BIN(15,0),
      2 HOUR                  FIXED BIN(15,0),
      2 MINUTE                FIXED BIN(15,0),
      2 SECOND                FIXED BIN(15,0),
      2 TIME_BASIS_CODE       FIXED BIN(15,0),
      2 BLANK9                CHAR(12) INIT(' '),
      2 REM_TELE_UNIT_NUM     FIXED BIN(15,0),
      2 REM_TELE_CHAN_NUM     FIXED BIN(15,0),
      2 BLANK10               CHAR(54) INIT(' '),
      2 TRACE_REFER1          FIXED BIN(15,0);

DECLARE
    1 TRACE_DATA             BASED(TRA_PNTR),
      2 NMB_SAMP             FIXED BIN (15,0),
      2 A(II REFER(NMB_SAMP)) FLOAT DEC(6,0);

    DCL TRACE(8000) FLOAT(6) BASED(TRA_INP_PNTR);
    DCL TRACI(8000) FIXED BIN(15,0);

/* DECLARE POINTERS  */
    DCL (TRA_INP_PNTR,
         TRA_PNTR
        ) PTR;

    DCL ADDR BUILTIN;
    DCL READTP EXTERNAL ENTRY ((*)FIXED BIN(15), FIXED BIN(31));
    DCL XPLTCAL EXTERNAL ENTRY (PTR,PTR,FIXED BIN(31),
                               FIXED BIN(31),FIXED BIN(15),
```

```
                                        (*,*)FLOAT(6),(*,*)FLOAT(6),
                                        FLOAT(6),FIXED BIN(31),
                                        FLOAT(6));
         DCL XPLOT EXTERNAL ENTRY((*,*)FLOAT(6),(*,*)FLOAT(6),
                                        FIXED BIN(31),FIXED BIN(15),
                                        FIXED BIN(31),(*)FIXED BIN(15),
                                        FLOAT(6));

      TRA_INP_PNTR = ADDR(TRACI);

/* END OF FILE */
ON ENDFILE(SYSIN) BEGIN;
   IF CP_REQUESTED = 0 THEN DO;
      PUT SKIP EDIT('DATA ERROR  ABORT   DSPIKE') (A);
      STOP;
   END;
END;

/* INPUT PARMS */

      GET FILE(SYSIN) EDIT(ID) (A(2));

      /* TEST FOR CROSSPLOT REQUESTED */

      IF ID = CP THEN DO;

         CP_REQUESTED = 1;

         GET FILE(SYSIN) EDIT(FIRST_CP_RECORD,
                              LAST_CP_RECORD,
                              CP_INC,
                              CP_NOR_WIND,
                              SAMPLE_RATE,
                              DR)
                              (F(4),F(4),F(2),F(5),F(1),F3,1));
         GET FILE(SYSIN) EDIT((TRACE#(I) DO I=1 TO 24))
                              (COL(1),(24)F(3));
         GET FILE(SYSIN) EDIT((FB(I) DO I = 1 TO 18))
                              (COL(1),(18)F(4));
         GET FILE(SYSIN) EDIT((FB(I) DO I = 19 TO 24))
                              (COL(1),(5)F(4));

         /* COUNT TRACE NUMBERS */

         DO J = 1 TO 24;
            IF TRACE#(J) ¬= 0 THEN NUM_CP_TRACES = NUM_CP_TRACES + 1;
         END;

         /* PRINT INPUT VALUES */

         PUT SKIP EDIT('CROSSPLOT REQUESTED') (A);
         PUT SKIP EDIT('FIRST RECORD FOR CROSSPLOT IS ',
                        FIRST_CP_RECORD) (A,F(4));
         PUT SKIP EDIT('STOP RECORD FOR CROSSPLOT IS ',
                        LAST_CP_RECORD) (A,F(4));
         PUT SKIP EDIT('CROSSPLOT INCREMENT IS ',
```

```
                          CP_INC) (A,F(2));
         PUT SKIP EDIT('CROSSPLOT NORMALIZING WINDOW IS',
                          CP_NOR_WIND, ' MS')
                          (A,F(5),A);
         PUT SKIP EDIT('SAMPLE_RATE IS ',SAMPLE_RATE) (A,F(1));
         IF DR = 0 THEN DR = 1E+0;
         PUT SKIP EDIT('DERIVATIVE MEAN TO AMPLITUDE MEAN RATIO',
                          DR) (A,F(3,1));
         PUT SKIP EDIT('TRACES WITHIN RECORD FOR CROSSPLOT FOLLOW')
                          (A);
         PUT SKIP EDIT((TRACE#(I) DO I = 1 TO NUM_CP_TRACES)) (F(3));
         PUT SKIP EDIT('FIRST BREAK VALUES IN MS:') (A);
         PUT SKIP EDIT((FB(I) DO I = 1 TO NUM_CP_TRACES)) (F(5));

     END; /* CP READ IF */
     ELSE DO;
         PUT SKIP EDIT('ERROR IN INPUT DATA  ***ABORT*** CROSSPLT')
         (A);
     END;

     /* CONVERT FIRST BREAKS TO SAMPLES */
     DO I = 1 TO NUM_CP_TRACES;
         FB(I) = FB(I)/SAMPLE_RATE;
     END;

     /* CONVERT WINDOW LENGTH TO SAMPLES *
     CP_NOR_WIND = CP_NOR_WIND/SAMPLE_RATE;

     /*   SET MEAN   */
     MEAN = 1E+1;


     /* INPUT TAPE RECORD */

     TRA_FLG = 0;
     ITN = 1;
     DO WHILE (EOF=0);
         CALL READTP(TRACI,LENGTH);
         IF LENGTH = -1 THEN DO;
             EOF = 1;
         END;
         ELSE DO;
             IF LENGTH ^= 3200 & LENGTH ^= 400 THEN DO;
             TRACE_REFER1 = NUM_SAMP + 1;
             TRA_PNTR = ADDR(TRACE_REFER1);
             A(NUM_SAMP+1) = A(NUM_SAMP);
             IF FILE_NUM = FIRST_CP_RECORD | FIRST_CP_RECORD = 0
                             THEN DO;
                 FIRST_CP_RECORD = -1;
                 SAV_FILE = FILE_NUM;
                 FIRST_FLAG = 1;
                 ICNT = CP_INC;
             END;
             IF SAV_FILE = FILE_NUM THEN DO;
                 IF CP_INC = ICNT THEN DO;
                 DO I = 1 TO NUM_CP_TRACES WHILE(TRA_FLG=0);
                     IF TRACE#(I) = TRACE_NUM THEN DO;
                         TRA_FLG = 1;
                         NS = NUM_SAMP;
                         MOD = FB(I);
```

23

```
                    CALL XPLTCAL(TRA_INP_PNTR,TRA_PNTR,NS,
                          CP_NOR_WIND,ITN,D,AN,MEAN,MOD,
                          OR);
                    ITN = ITN + 1;
                END;
            END;
            TRA_FLG = 0;
        END;
    END;
    ELSE DO;
        IF FIRST_FLAG = 1 THEN DO;
            IF CP_INC = ICNT THEN DO;
                ITN = ITN - 1;
                CALL XPLOT(AN,D,NS,ITN,SAV_FILE,TRACE#,MEAN);
                PLT_CNT = PLT_CNT + 1;
                ICNT = 1;
            END;
            ELSE DO;
                ICNT = ICNT + 1;
            END;
            SAV_FILE = FILE_NUM;
            ITN = 1;
        END;
    END;
    IF FILE_NUM = LAST_CP_RECORD THEN EOF = 1;
    END;
END;
END;
PUT PAGE EDIT(' ') (A);
IF LENGTH = -1 THEN
    PUT SKIP EDIT('END OF FILE ENCOUNTERED') (A);
PUT SKIP EDIT('END OF JOB',PLT_CNT,' PLOTS GENERATED')
    (A,F(3),A);
END; /* CROSPLT */
PROCESS MAR(2,72,1);
XPLOT: PROC(AN,D,NS,NT,FILE,TRACE#,MEAN);


/* INPUT VARIABLES */
/* AN - AMPLITUDE DATA                    */
/* D  - DERIVATIVE                        */
/* NT - NUMBER OF TRACES IN PLOT          */
/* NS - NUMBER OF SAMPLES                 */
/* FILE - RECORD NUMBER OF PLOT           */
/* TRACE# - TRACE NUMBERS IN PLOT         */
/* MEAN - MEAN TO NORMALIZE ON            */

DCL NS           FIXED BIN(31,0);
DCL NT           FIXED BIN(15,0);
DCL FILE         FIXED BIN(31,0);
DCL TRACE#(24)   FIXED BIN(15,0);
DCL MEAN         FLOAT(6);
DCL IM           FIXED BIN(15,0) INIT(0);
DCL R2           FLOAT(6);
DCL R4           FLOAT(6);
DCL R6           FLOAT(6);
DCL P2           FLOAT(6);
DCL P4           FLOAT(6);
DCL P6           FLOAT(6);
DCL AS           FLOAT(6);
DCL AN(4000,24)    FLOAT(6);
```

```
DCL CP(50,66)    CHAR(1) INIT((3300)' ');
DCL LINE(50) CHAR(66) BASED (CP_PNTR);
DCL D(4000,24)        FLOAT(6);
DCL DP(49,60)         FIXED BIN(15,0) INIT((2880)0);
DCL TABLE(9) CHAR(1) INIT('1','2','3','4','5','6','7','8','9');
DCL M            FIXED BIN(15,0);
DCL L            FIXED BIN(15,0);
DCL I            FIXED BIN(15,0);
DCL K            FIXED BIN(15,0);
DCL J            FIXED BIN(15,0);
DCL CP_PNTR PTR;

DCL ABS BUILTIN;
DCL ADDR BUILTIN;

CP_PNTR = ADDR(CP(1,1));

DO J = 1 TO 50;
DO K = 1 TO 66;
    CP(J,K) = ' ';
END;
END;

DO J = 1 TO 49;
    CP(J,3) = '+';
END;

CP(21,1) = 'A';
CP(22,1) = 'M';
CP(23,1) = 'P';
CP(24,1) = 'L';
CP(25,1) = 'I';
CP(26,1) = 'T';
CP(27,1) = 'D';
CP(28,1) = 'U';
CP(29,1) = 'E';

/* PUT DATA POINTS INTO 60 X 30 GRID */

DO I = 1 TO 49;
DO K = 1 TO 60;
    DP(I,K) = 0;
END;
END;

DO K = 1 TO NT;
DO J = 1 TO NS;
    M = AN(J,K)/1.222E0 + 5E-1;
    IF M < 1 THEN M = 1;
    L = D(J,K) + 5E-1;
    IF L < 1 THEN L = 1;
    IF M > 49 THEN M = 49;
    IF L > 60 THEN L = 60;
    DP(M,L) = DP(M,L) + 1;
END;
END;

L = 1;
K = 49;
DO I = 2 TO 50;
DO J = 4 TO 63;
```

25

```
        IF DP(K,L) = 0 THEN CP(I,J) = ' ';
        IF DP(K,L) > 10 THEN CP(I,J) = '0';
        IF DP(K,L) > 0 & DP(K,L) < 10 THEN DO;
           M = DP(K,L);
           CP(I,J) = TABLE(M);
        END;
     L = L + 1;
     END;
     L = 1;
     K = K - 1;
     END;

     /* BEGIN PLOT */
     PUT PAGE EDIT(' ') (A);
     PUT SKIP EDIT('0','3X','6X') (COL(4),A,COL(33),A,COL(63),A);
     PUT     EDIT('DERIVATIVE VERSUS AMPLITUDE CROSSPLOT')
                 (COL(75),A);
     PUT SKIP EDIT('+','+','+','I','+','+','+')
                 (COL(3),A,COL(13),A,COL(23),A,COL(33),A,COL(43),A,COL(53),
                  A,COL(63),A);
     CP(1,64) = '+';
     CP(1,65) = '6';
     CP(1,66) = 'X';
     CP(25,64) = '+';
     CP(25,65) = '3';
     CP(25,66) = 'X';
     CP(49,64) = '+';
     CP(49,65) = '0';
     IM = 49-(MEAN/1.222E0 + 5E-1);
     CP(IM,64) = 'M';

     CP(50,1) = ' ';
     CP(50,2) = ' ';
     CP(50,3) = ' ';
     DO I = 4 TO 63;
        CP(50,I) = '+';
     END;

     K = 1;
     DO I = 1 TO 50;
        PUT SKIP EDIT(LINE(I)) (A);
        IF I = 3 THEN
           PUT EDIT ('RECORD NUMBER ',FILE) (COL(75),A,F(6));
        IF I = 4 THEN
           PUT EDIT('TRACES:') (COL(75),A);
        IF I > 5 & K <=NT THEN DO;
           PUT EDIT(TRACES(K)) (COL(82),F(3));
           K = K + 1;
        END;
     END;

     DO I = 1 TO 66;
        CP(50,I) = ' ';
     END;

     CP(50,4) = '0';
     CP(50,33) = '3';
     CP(50,34) = 'X';
     CP(50,63) = '6';
     CP(50,64) = 'X';
     IM = MEAN + 3.5E0;
```

26

```
            CP(50,IM) = 'M';
            PUT SKIP EDIT(LINE(50)) (A);
            R2 = 0;
            R4 = 0;
            R6 = 0;
            DO I = 1 TO NS;
            DO J = 1 TO NT;
                IF AN(I,J)**2 + D(I,J)**2 > 1.225E+3 THEN DO;
                    R2 = R2 + 1;
                END;
                IF AN(I,J)**2 + D(I,J)**2 > 1.6E+3 THEN DO;
                    R4 = R4 + 1;
                END;
                IF AN(I,J)**2 + D(I,J)**2 > 2.025E+3 THEN DO;
                    R6 = R6 + 1;
                END;
            END;
            END;
            AS = NT*NS;
            P2 = R2/AS*1E2 + 5E-1;
            P4 = R4/AS*1E2 + 5E-1;
            P6 = R6/AS*1E2 + 5E-1;
            IF P2 < 1E0 THEN P2 = 0E0;
            IF P4 < 1E0 THEN P4 = 0E0;
            IF P6 < 1E0 THEN P6 = 0E0;
            PUT SKIP EDIT('<---DERIVATIVE--->') (COL(22),A);
            PUT SKIP EDIT(' ') (A);
            PUT SKIP EDIT('% REJECTED FOR RADIUS = 3.5X:',P2) (A,F(6,0));
            PUT SKIP EDIT('% REJECTED FOR RADIUS = 4.0X:',P4) (A,F(6,0));
            PUT SKIP EDIT('% REJECTED FOR RADIUS = 4.5X:',P6) (A,F(6,0));
            END; /* XPLOT */
* PROCESS MAR(2,72,1);
 XPLTCAL: PROC(TRA_INP_PNTR,TRA_PNTR,NS,W,INT,D,AN,MEAN,MOD,DR);


        /*  INPUT VARIABLES */
        /*  TRACE_PNTR - LOCATION OF TRACE               */
        /*  NS - NUMBER SAMPLES                          */
        /*  LC - LAST RECORD TO DESPIKE                  */
        /*  W  - NUMBER SAMPLE/NORMALIZING WINDOW        */
        /*  INT- TRACE NUMBER                            */
        /*  MEAN - MEAN TO NORMALIZE                     */
        /*  MOD - FIRST BREAK MODIFICATION               */
        /*  DR  - DERIVATIVE TO AMPLITUDE RATIO          */

        DCL NS          FIXED BIN(31,0);
        DCL W           FIXED BIN(31,0);
        DCL INT         FIXED BIN(15,0);
        DCL MEAN        FLOAT(6);
        DCL DR          FLOAT(6);
        DCL MOD         FIXED BIN(31,0);
        DCL NC          FIXED BIN(31,0);
        DCL NW          FIXED BIN(31,0);
        DCL LS          FIXED BIN(31,0);
        DCL FS          FIXED BIN(31,0);
        DCL WC          FIXED BIN(31,0);
        DCL NS2         FIXED BIN(31,0) INIT(0);
        DCL AN(4000,24)     FLOAT(6);
        DCL D(4000,24)      FLOAT(6);
        DCL AF          FLOAT(6);
        DCL AT          FLOAT(6);
```

```
       DCL DF              FLOAT(6);
       DCL DT              FLOAT(6);
       DCL FF              FIXED BIN(15,0);
       DCL Z               FIXED BIN(15,0);
       DCL G               FIXED BIN(15,0);
       DCL H               FIXED BIN(15,0);
       DCL K               FIXED BIN(15,0);
       DCL J               FIXED BIN(15,0);

  /*BRING IN TRACE STRUCTURE*/
       DECLARE
         1 TRACE_ID_HEADER              BASED(TRA_INP_PNTR),
           2 TRA_SEQ_NUM_LINE           FIXED BIN(31,0),
           2 TRA_SEQ_NUM_REEL           FIXED BIN(31,0),
           2 FILE_NUM                   FIXED BIN(31,0),
           2 TRACE_NUM                  FIXED BIN(31,0),
           2 ENERGY_SO_PT_NUM           FIXED BIN(31,0),
           2 SHOT_POINT                 FIXED BIN(31,0),
           2 BLANK1                     CHAR(4) INIT(' '),
           2 TRA_ID_CODE                FIXED BIN(15,0),
           2 BLANK2                     CHAR(2) INIT(' '),
           2 BLANK3                     CHAR(2) INIT(' '),
           2 DATA_USE                   FIXED BIN(15,0),
           2 BLANK4                     CHAR(12) INIT(' '),
           2 SOURCE_DEPTH               FIXED BIN(31,0),
           2 BLANK5                     CHAR(54) INIT(' '),
           2 TIME_BRK_DIFF              FIXED BIN(15,0),
           2 BLANK6                     CHAR(6) INIT(' '),
           2 NUM_SAMP                   FIXED BIN(15,0),
           2 SAMP_INTERV                FIXED BIN(15,0),
           2 GAIN_TYPE                  FIXED BIN(15,0),
           2 INSTR_GAIN                 FIXED BIN(15,0),
           2 BLANK7                     CHAR(18) INIT(' '),
           2 ALIAS_FILT_FREQ            FIXED BIN(15,0),
           2 ALIAS_FILT_SLOPE           FIXED BIN(15,0),
           2 NOTCH_FILT_FREQ            FIXED BIN(15,0),
           2 BLANK8                     CHAR(10) INIT(' '),
           2 YEAR                       FIXED BIN(15,0),
           2 DAY                        FIXED BIN(15,0),
           2 HOUR                       FIXED BIN(15,0),
           2 MINUTE                     FIXED BIN(15,0),
           2 SECOND                     FIXED BIN(15,0),
           2 TIME_BASIS_CODE            FIXED BIN(15,0),
           2 BLANK9                     CHAR(12) INIT(' '),
           2 REM_TELE_UNIT_NUM          FIXED BIN(15,0),
           2 REM_TELE_CHAN_NUM          FIXED BIN(15,0),
           2 BLANK15                    CHAR(54) INIT(' '),
           2 TRACE_REFER1               FIXED BIN(15,0);

       DECLARE
         1 TRACE_DATA                   BASED(TRA_PNTR),
           2 NMB_SAMP                   FIXED BIN (15,0),
           2 A(II REFER(NMB_SAMP)) FLOAT DEC(6,0);


  /* DECLARE POINTERS  */
       DCL (TRA_INP_PNTR,
            TRA_PNTR
            ) PTR;
       DCL ABS BUILTIN;
       DCL TRACE_PNTR PTR;
```

```
NS2 = NS - MOD;
NW =NS2/W;
WC=NW*W;
NW =NS2/W + 1;
IF NS2 > WC THEN NW = NW + 1;
WC = 0;
/* CALCULATE DERIVATIVE MAGNITUDE BY FORWARD DIFFERENCE */

DO J = 1 TO NS;
   K = J + 1;
   D(J,INT) = ABS(A(K) - A(J));
END;

/* CALCULATE A WINDOW NORMALIZED AMPLITUDE AND DERIVATIVE */
/* CALCULATE WINDOW MEAN AMPLITUDE AND MEAN DERIVATIVE    */
/* CHECK FOR LAST WINDOW                                  */

DO WHILE (WC < NW);
  WC = WC + 1;
  IF WC = NW THEN DO;
     LS = NS;
  END;
  ELSE DO;
     LS = (WC-1)*W + MOD;
  END;

  FS = (WC-2)*W+1 + MOD;

  IF WC = 1 THEN DO;
     FS = 1;
     LS = MOD;
  END;

     /* CALCULATE MEAN AMPLITUDE */
     AT = 0;
     DO K = FS TO LS;
        AT = AT + ABS(A(K));
     END;
     IF AT = 0 THEN AT = 1;

     /* CALCULATE NORMALIZING FACTOR SO MEAN AMPLITUDE IS 10 */
     AF = 10*(LS-FS)/AT;
     /* NORMALIZE AMPLITUDES */
     DO K = FS TO LS;
        AN(K,INT) = AF*ABS(A(K));
     END;

     /* CALCULATE MEAN DERIVATIVE */
     DT = 0;
     DO K = FS TO LS;
        DT = DT + D(K,INT);
     END;
     IF DT = 0 THEN DT = 1;

     /* CALCULATE NORMALIZING FACTOR SO MEAN DERIVATIVE IS 10 */
     DF = DR*10*(LS-FS)/DT;
     /* NORMALIZE DERIVATIVES */
     DO K = FS TO LS;
        D(K,INT) = DF*D(K,INT);
     END;
```

```
       IF FS>= LS THEN WC=NW;

    END; /* DO WHILE (WC> NW) */


    END; /* XPLOT */
> PROCESS;
READTP: PROCEDURE(BUFFER,LENGTH);

/* THE FUNCTION OF THIS ROUTINE IS TO READ A DATA RECORD FROM THE   */
/* INPUT TAPE INTO 'BUFFER' AND TO PASS THE BUFFER AND LENGTH OF    */
/* THE DATA RECORD IN BYTES 'LENGTH' BACK TO THE CALLING ROUTINE.   */

/************/
/* INPUTS: */
/************/

     /* BUFFER - BUFFER TO PLACE DATA RECORD FROM TAPE.             */
     /* LENGTH - LENGTH OF DATA BUFFER IN BYTES.                    */


/*************/
/* OUTPUTS: */
/*************/

     /* BUFFER - BUFFER CONTAING DATA FROM INPUT TAPE.              */
     /* LENGTH - LENGTH OF DATA RECORD IN BYTES. IF THERE           */
     /*          WAS AN ERROR TRYING TO READ THE RECORD             */
     /*          LENGTH WILL BE SET NEGATIVE. IF AND EOF            */
     /*          IS ENCOUNTERED LENGTH WILL BE SET TO -1.           */


/************************/
/* INTERNAL VARIABLES: */
/************************/

     /*          DDNAME - DDNAME OF DDCARD FOR INPUT DEVICE.        */
     /*          R      - CHAR TO SIGNAL I/O ROUTINE TO WRITE       */
     /*                   DEVICE.                                   */


/***************/
/* EXTERNALS: */
/***************/

     /* TAPEID - ASSEMBLER ROUTINE TO DO ACTUAL INPUT FROM          */
     /*          DEVICE.                                            */


/********************/
/* DECLARE INPUTS */
/********************/

     DCL BUFFER(*)   FIXED BIN(15,0);
     DCL LENGTH      FIXED BIN(31,0);
```

```
/****************************/
/* DECLARE INTERNAL VARIABLES */
/****************************/

        DCL DDNAME  CHAR(8) INIT('DSPIKEIN');
        DCL R       CHAR(4) INIT('R   ');


/********************/
/* DECLARE EXTERNALS */
/********************/

        DCL TAPEIO ENTRY OPTIONS(ASM,INTER);


/****************************/
/* INPUT FROM INPUT DEVICE */
/****************************/

        CALL TAPEIO(DDNAME,BUFFER,LENGTH,R);


/********/
/* EXIT */
/********/

        RETURN;
        END; /* READTP */
//LKED.SYSLMOD DD DSN=A.GP1.P7094.RDLIB,DISP=SHR
//LKED.GSLIB DD DSN=A.GP1.P7094.GSLIB,DISP=SHR
//LKED.RDLIB DD DSN=A.GP1.P7094.RDLIB,DISP=SHR
//LKED.SYSIN DD *
 ENTRY PLISTART
 INCLUDE RDLIB(CROSSPLT)
 NAME CROSSPL2(R)
//*0.SYSPRINT DD SYSOUT=*
//*0.PLIDUMP DD SYSOUT=*
//*0.DSPIKEIN DD UNIT=TAPE,DISP=(OLD,KEEP),DSN=NFB.DESPIKE.TEST,
//*    LABEL=(,NL,EXPDT=98000),DCB=(RECFM=U,BLKSIZE=32000),
//*    VOL=SER=1234
//*0.DSPIKEIN DD UNIT=SYSDA,DISP=(OLD,KEEP),DSN='$NFB.CO2TEST.DATA'
//*0.SYSIN DD *
//*571 575 1   5004
//*   5 15 20 25 30
//*0 980 900 850 800 750
//*
```

**Claims**

1. A method for removing noise from geophysical data comprising the steps of:

(a) selecting a plurality of data points in said geophysical data;

(b) determining the amplitude of said data at said plurality of data points;

(c) determining the derivative of said data at said plurality of data points;

(d) crossplotting the derivative values determined in step (c) as a function of the amplitude values determined in step (b);

(e) selecting a rejection line on the crossplot of step (d), wherein all data points which plot outside of said rejection line are treated as noise; and

(f) assigning a new amplitude value to each data point which plots outside of said rejection line to thereby remove noise at said data point from said data.

2. A method in accordance with claim 1 further comprising the steps of:

a1) selecting a normalizing window having a desired time length, wherein said normalizing window contains at least a portion of said plurality of data points in step (a);

(b1) determining the amplitude in step (b) at all data points contained in said normalizing window;

(b2) determining the average of the amplitudes determined in step (b1) to establish an average amplitude for said normalizing window;

(b3) selecting a normalizing constant having a desired magnitude;

(b4) dividing said normalizing constant by said average amplitude to establish a first multiplier;

3. A method in accordance with claim 1 or 2, wherein said data is selected from the group consisting of seismic data, density log data and sonic log data.

4. A method in accordance with claim 3 wherein said data is seismic wiggle traces.

5. A method in accordance with claim 1 or 2, wherein the derivative of said data at said plurality of data points is determined by a two point forward difference or backward difference calculation.

6. A method in accordance with claim 1 or 2, wherein said step of assigning a new amplitude value comprises zeroing the amplitude value of data at each data point which plots outside of said rejection line or interpolating a new amplitude for the data at each data point which plots outside of said rejection line based on good data points on each side of the data point which plots outside of said rejection line.

7. A method in accordance with claim 2 wherein said normalizing window contains at least about 100 data points.

8. A method in accordance with claim 7 wherein said data points are 4 milliseconds apart and wherein the length of said normalizing window is in the range of about 500 milliseconds to about 1000 milliseconds.

9. A method in accordance with claim 8 wherein said data is seismic wiggle traces and wherein the first normalizing window begins at the first break time.

10. A method in accordance with claim 2 wherein said data is seismic wiggle traces and wherein said normalizing constant has a magnitude of about 10.

11. A method in accordance with claim 2 wherein said rejection line is a circle.

12. A method in accordance with claim 11 wherein the radius of said circle is in the range of about 3 times said normalizing constant to about 6 times said normalizing constant.

13. A method in accordance with claim 12 wherein the radius of said circle is in the range of about 4 times said normalizing constant to about 4.5 times said normalizing constant.

(b5) multiplying the amplitude of said data at each of the plurality of data points contained in said normalizing window by said first multiplier to establish a plurality of normalized amplitude values for the data at each of the data points contained in said normalizing window;

(c1) determining the derivative of step (c) at all data points contained in said normalizing window;

(c2) determining the average of the derivatives determined in step (c1) to establish an average derivative for said normalizing window;

(c3) dividing said normalizing constant by said average derivative for said normalizing window to establish a second multiplier;

(c4) multiplying each derivative determined in step (c1) by said second multiplier to establish a normalized derivative value for the data at each data point contained in said normalizing window;

(d1) performing step (d) by crossplotting the normalized derivative values determined in step (c4) as a function of the normalized amplitude values determined in step (b5).

14. A method in accordance with claim 2 wherein steps (a1) to (f) are repeated to improve the removal of noise from said data.

**Patentansprüche**

1. Verfahren zur Beseitigung des Rauschens von geopysikalischen Daten, umfassend die Stufen:

(a) Auswählen einer Mehrzahl von Datenpunkten in den geophysikalischen Daten)

ι (b) Bestimmen der Amplitude der Daten an der Mehrzahl von Datenpunkten;

(c) Bestimmen der Ableitung der Daten an der Mehrzahl von Datenpunkten;

(d) Auftragen der in Stufe (c) bestimmten Ableitungswerte als Funktion der in Stufe (b) bestimmten Amplitudenwerte;

(e) Auswählen eine Sperrlinie auf der Koordinaten-Darstellung von Stufe (d), wobei sämtliche Datenpunkte, die ausserhalb der Sperrlinie liegen, als Rauschen behandelt werden; und

(f) Zuordnen eines neuen Amplitudenwerts für einzelne Datenpunkte, die ausserhalb der Sperrlinie liegen, um hierbei das Rauschen am Datenpunkt von den Daten zu entfernen.

2. Verfahren nach Anspruch 1, das zusätzlich folgende Stufen umfasst:

(a1) Auswählen eines Normalisierungsfensters mit einer gewünschten Zeitlänge, wobei das Normalisierungsfenster mindestens einen Teil der Mehrzahl von Datenpunkten in Stufe (a) umfasst;

(b1) Bestimmen der Amplitude in Stufe (b) an sämtlichen im Normalisierungsfenster enthaltenen Datenpunkten;

(b2) Bestimmen des Mittelwerts der in Stufe (b1) bestimmten Amplituden, um eine mittlere Amplitude für das Normalisierungsfenster festzustellen;

(b3) Auswählen einer Normalisierungskonstante mit einer gewünschten Größe;

(b4) Dividieren der Normalisierungskonstante durch die mittlere Amplitude, um eine erste Multipliziereinheit festzulegen;

(b5) Multiplizieren der Amplitude der Datan an jedem einzelnen Punkt der Mehrzahl von Datenpunkten, die im Normalisierungsfenster enthalten sind, mit der ersten Multipliziereinheit, um eine Mehrzahl von normalisierten Amplitudenwerten für die Daten an jedem einzelnen Punkt der Datenpunkte, die im Normalisierungsfenster enthalten sind, festzustellen;

(c1) Bestimmen der Ableitung von Stufe (c) an sämtlichen im Normalisierungsfenster enthaltenen Datenpunkten;

(c2) Bestimmen des Mittelwerts der in Stufe (c1) bestimmten Ableitungen, um eine mittlere Ableitung für das Normalisierungsfester festzustellen;

(c3) Dividieren der Normalisierungskonstante durch die mittlere Ableitung für das Normalisierungsfenster, um eine zweite Multipliziereinheit festzustellen;

(c4) Multiplizieren der einzelnen in Stufe (c1) bestimmten Ableitungen mit der zweiten Multipliziereinheit, um einen normalisierten Ableitungswert für die Daten an jedem einzelnen Punkt der im Normalisierungsfenster enthaltenen Datenpunkte festzustellen;

(d1) Durchführen der Stufe (d) durch Auftragen der in Stufe (c4) bestimmten normalisierten Ableitungswerte als Funktion der in Stufe (b5) bestimmten normalisierten Amplitudenwerte.

3. Verfahren nach Anspruch 1 oder 2, wobei die Daten aus der Gruppe von seismischen Daten, Dichtelog-Daten und Schall-log-Daten ausgewählt sind.

4. Verfahren nach Anspruch 3, wobei es sich bei den Daten um seismische Schwebungsspuren handelt.

5. Verfahren nach Anspruch 1 oder 2, wobei die Ableitung der Daten an der Mehrzahl von Datenpunkten durch eine Zweipunkt-Vorwärtsdifferenz- oder -Rückwärtsdifferenz-Berechnung bestimmt wird.

6. Verfahren nach Anspruch 1 oder 2, wobei die Stufe der Zuordnung eines neuen Amplitudenwerts die Nullstellung des Amplitudenwerts der Daten an den einzelnen Datenpunkten, die ausserhalb der Sperrlinie liegen oder das Interpolieren einer neuen Amplitude für die Daten an den einzelnen Datenpunkten, die ausserhalb der Sperrlinie liegen, bezogen auf gute Datenpunkte auf jeder Seite des Datenpunkts, der ausserhalb der Sperrlinie liegt, umfasst.

7. Verfahren nach Anspruch 2, wobei das Normalisierungsfenster mindestens etwa 100 Datenpunkte enthält.

8. Verfahren nach Anspruch 7, wobei die Datenpunkte 4 Millisekunden auseinander liegen und wobei die Länge des Normalisierungsfensters im Bereich von etwa 500 Millisekunden bis etwa 1000 Millisekunden liegt.

9. Verfahren nach Anspruch 8, wobei es sich bei den Daten um seismische Schwebungsspuren handelt und wobei das erste Normalisierungsfenster zum ersten Bruchzeitpunkt beginnt.

10. Verfahren nach Anspruch 2, wobei es sich bei den Daten um seismische Spurendaten handelt und wobei die Normalisierungskonstante eine Grössenordnung von etwa 10 aufweist.

11. Verfahren nach Anspruch 2, wobei die Sperrlinie kreisförmig ist.

12. Verfahren nach Anspruch 11, wober der Radius des Kreises im Bereich von etwa dem 3-fachen der Normalisierungskonstante bis zum etwa 6-fachen der Normalisierungskonstante liegt.

13. Verfahren nach Anspruch 12, wobei der Radius des Kreises im Bereich des etwa 4-fachen der Normalisierungskonstante bis zum etwa 4,5-fachen der Normalisierungskonstante liegt.

14. Verfahren nach Anspruch 2, wobei die Stufen (a1) — (f) wiederholt werden, um die Entfernung des Rauschens von Daten zu verbessern.

**Revendications**

1. Procédé pour éliminer le bruit dans une donnée géophysique, comprenant les étapes consistant à:
(a) sélectionner une multitude de points de données dans la donnée géophysique;
(b) déterminer l'amplitude de la donnée à la multitude de points de données;
(c) déterminer la dérivée de la donnée à la multitude de points de données;

(d) représenter en coordonnées les valeurs de la dérivée déterminées dans l'étape (c) en fonction des valeurs de l'amplitude déterminées dans l'étape (b);

(d) choisir une ligne de rejet sur la représentation en coordonnées de l'étape (d), où tous les points de données qui se trouvent à l'extérieure de la ligne de rejet sont traités comme bruit; et

(f) affecter une nouvelle valeur de l'amplitude à chaque point de donnée se trouvant graphiquement à l'exérieur de la ligne de rejet de manière à éliminer ainsi de la donnée le bruit audit point de donnée.

2. Procédé selon la revendication 1, comprenant en outre les étapes consistant à:

(a1) sélectionner une fenêtre de normalisation ayant une durée désirée, dans laquelle la fenêtre de normalisation contient au moins une partie de la multitude de points de données dans l'étape (a);

(b1) déterminer l'amplitude dans l'étape (b) à tous les points de données contenus dans la fenêtre de normalisation;

(b2) déterminer la moyenne des amplitudes déterminées dans l'étape (b1) afin d'établir une amplitude moyenne pour la fenêtre de normalisation;

(b3) sélectionner une constante de normalisation ayant une amplitude désirée;

(b4) diviser la constante de normalisation par l'amplitude moyenne afin d'établir un premier multiplicateur;

(b5) multiplier l'amplitude de la donnée à chacun de la multitude des points de données contenus dans la fenêtre de normalisation par le premiere multiplicateur afin d'établir une multitude de valeurs d'amplitude normalisée pour la donnée à chacun des points de données contenus dans la fenêtre de normalisation;

(c1) déterminer la dérivée de l'étape (c) à tous les points de données contenus dans la fenêtre de normalisation;

(c2) déterminer la moyenne des dérivées déterminée dans l'étape (c1) afin d'établir une dérivée moyenne pour la fenêtre de normalisation;

(c3) diviser la constante de normalisation par la dérivée moyenne pour la fenêtre de normalisation afin d'établir un second multiplicateur;

(cf) multiplier chaque dérivée déterminée dans l'étape (c1) par le second multiplicateur pour établir une valeur de dérivée normalisée pour la donnée à chaque point de donnée contenu dans la fenêtre de normalisation;

(d1) exécuter l'étape (d) en représentant en coordonnées les valeurs de la dérivée normalisée déterminées dans l'étape (c4) en fonction des valeurs de l'amplitude normalisée déterminées dans l'étape (b5).

3. Procédé selon la revendication 1 ou 2, dans lequel la donnée est choisie dans le groupe constitué de données sismiques, de données logarithmiques de densité et de données logarithmiques soniques.

4. Procédé selon la revendication 3, dans lequel la donnée est des traces agitées sismiques.

5. Procédé selon la revendication 1 ou 2, dans lequel la dérivée de la donnée à la multitude de points de données est déterminée par un calcul de différence avant ou de différence arrière de deux points.

6. Procédé selon la revendication 1 ou 2, dans lequel l'étape d'affectation d'une nouvelle valeur d'amplitude comprend la mise à zéro de la valeur d'amplitude des données à chaque point de donnée qui sont graphiquement à l'extérieur de la ligne de rejet ou l'interpolation d'une nouvelle amplitude pour la donnée à chaque point de donnée qui est graphiquement à l'extérieur de la ligne de rejet, sur la base de bons points de données de chaque côté du point de donnée qui est graphiquement à l'extérieur de la ligne de rejet.

7. Procédé selon la revendication 2, dans lequel la fenêtre de normalisation contient au moins environ 100 points de données.

8. Procédé selon la revendication 7, dans lequel les points de données sont espacés de 4 millisecondes, et dans lequel la longeur de la fenêtre de normalisation se trouve dans la gamme allant d'environ 500 millisecondes à environ 1000 millisecondes.

9. Procédé selon la revendication 8, dans lequel la donnée est des traces agitées sismiques et dans lequel la première fenêtre de normalisation commence au premier instant de rupture.

10. Procédé selon la revendication 2, dans lequel la donnée est des traces agitées sismiques et dans lequel la constante de normalisation a une amplitude d'environ 10.

11. Procédé selon la revendication 2, dans lequel la ligne de rejet est un cercle.

12. Procédé selon la revendication 11 dans lequel le rayon du cercle est compris entre environ 3 fois la constante de normalisation et environ 6 fois la constante de normalisation.

13. Procédé selon la revendication 12, dans lequel la rayon du cercle est compris entre environ 4 fois la constante de normalisation et environ 4,5 fois la constante de normalisation.

14. Procédé selon la revendication 2, dans lequel les étapes (a1) à (f) sont répétées de manière à améliorer l'élimination du bruit dans la donnée.

EP 0 182 956 B1

FIG. 1

FIG. 2

EP 0 182 956 B1

FIG. 3

NORMALIZED DERIVATIVE VS. NORMALIZED AMPLITUDE
CROSSPLOT

FIG. 4

4

FIG. 5

EP 0 182 956 B1

FIG. 6

W/SPIKES

FIG. 7

7

FIG. 8

EP 0 182 956 B1

FIG. 9

FIG. 10

EP 0 182 956 B1

ABSOLUTE VALUE NORMALIZED AMPLITUDE

ABSOLUTE VALUE NORMALIZED DERIVATIVE

% REJECTED FOR RADIUS = 3.5X:  7
% REJECTED FOR RADIUS = 4.0X:  5
% REJECTED FOR RADIUS = 4.5X:  4

500 MS WINDOW

*FIG. II*

ABSOLUTE VALUE NORMALIZED AMPLITUDE

ABSOLUTE VALUE NORMALIZED DERIVATIVE

X REJECTED FOR RADIUS = 3.5X:   9
X REJECTED FOR RADIUS = 4.0X:   7
X REJECTED FOR RADIUS = 4.5X:   6

1000 MS WINDOW

*FIG. 12*

ABSOLUTE VALUE NORMALIZED AMPLITUDE

ABSOLUTE VALUE NORMALIZED DERIVATIVE

% REJECTED FOR RADIUS = 3.5X:  7
% REJECTED FOR RADIUS = 4.0X:  5
% REJECTED FOR RADIUS = 4.5X:  4

500 MS WINDOW
D/A RATIO = 1.0

FIG. 13

ABSOLUTE VALUE NORMALIZED AMPLITUDE

ABSOLUTE VALUE NORMALIZED DERIVATIVE

% REJECTED FOR RADIUS = 3.5X:   19
% REJECTED FOR RADIUS = 4.0X:   15
% REJECTED FOR RADIUS = 4.5X:   12

500 MS WINDOW
D/A RATIO = 2.0

FIG. 14

ABSOLUTE VALUE NORMALIZED DERIVATIVE

X REJECTED FOR RADIUS = 3.5X:     6
X REJECTED FOR RADIUS = 4.0X:     4
X REJECTED FOR RADIUS = 4.5X:     4

500 MS WINDOW
D/A RATIO = .5

*FIG. 15*

*FIG. 16*